(19) Europäisches Patentamt / European Patent Office / Office européen des brevets

(11) **EP 4 419 315 B1**

(12) # FASCICULE DE BREVET EUROPEEN

(45) Date de publication et mention de la délivrance du brevet:
**20.05.2026 Bulletin 2026/21**

(21) Numéro de dépôt: **22835459.3**

(22) Date de dépôt: **20.10.2022**

(51) Classification Internationale des Brevets (IPC):
*B29C 70/02* (2006.01)  *B29C 37/00* (2006.01)
*B29C 70/08* (2006.01)  *B29C 70/20* (2006.01)
*B29C 70/22* (2006.01)  *B32B 5/02* (2006.01)
*B32B 5/12* (2006.01)  *B32B 5/16* (2006.01)
*B32B 5/18* (2006.01)  *B32B 5/22* (2006.01)
*B32B 5/26* (2006.01)  *B32B 7/10* (2006.01)
*B29C 65/00* (2006.01)  *B29C 70/44* (2006.01)
*B29C 70/50* (2006.01)  *B29C 70/54* (2006.01)
*B29C 70/56* (2006.01)  *B29C 70/82* (2006.01)
*B29C 70/48* (2006.01)

(52) Classification Coopérative des Brevets (CPC):
**B29C 70/224; B29C 70/026; B29C 70/08; B29C 70/081; B29C 70/086; B29C 70/20;** B29C 65/18; B29C 66/0242; B29C 66/0342; B29C 66/1122; B29C 66/30341; B29C 66/45; B29C 66/727; B29C 66/73921; B29C 66/83423;
(Cont.)

(86) Numéro de dépôt international:
**PCT/FR2022/051976**

(87) Numéro de publication internationale:
**WO 2023/067282 (27.04.2023 Gazette 2023/17)**

(54) **MATÉRIAU DE RENFORT COMPRENANT UNE COUCHE POREUSE EN UN POLYMÈRE THERMOPLASTIQUE RÉACTIF ET PROCÉDÉS ASSOCIÉS**

VERSTÄRKUNGSMATERIAL MIT EINER PORÖSEN SCHICHT AUS EINEM REAKTIVEN THERMOPLASTISCHEN POLYMER UND ZUGEHÖRIGE VERFAHREN

REINFORCING MATERIAL COMPRISING A POROUS LAYER MADE OF A REACTIVE THERMOPLASTIC POLYMER AND ASSOCIATED METHODS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **21.10.2021 FR 2111188**
**21.10.2021 FR 2111190**

(43) Date de publication de la demande:
**28.08.2024 Bulletin 2024/35**

(73) Titulaire: **Hexcel Reinforcements**
**01120 Dagneux (FR)**

(72) Inventeurs:
• BENETHUILIERE, Thibaut
01120 Dagneux (FR)
• VIARD, Andréa
01120 Dagneux (FR)
• PINEAU, Quentin
01120 Dagneux (FR)
• DANG, Patrick
01120 Dagneux (FR)

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-A1- 1 754 743      EP-A1- 2 644 371**
**WO-A1-2006/096170**

(52) Classification Coopérative des Brevets (CPC):
(Cont.)B29C 70/021; B29C 70/443; B29C 70/48;
B29C 70/504; B29C 70/546; B29C 70/547;

B29C 70/56; B29C 70/82; B32B 2250/03;
B32B 2250/05; B32B 2250/40; B32B 2260/021;
B32B 2260/023; B32B 2260/025; B32B 2260/046;
B32B 2262/0261; B32B 2262/0269; B32B 2262/101;
B32B 2262/106; B32B 2266/0257; B32B 2305/02;
B32B 2305/022; B32B 2305/026; D10B 2505/02

## Description

### Domaine Technique

La présente invention concerne le domaine technique des matériaux de renfort, adaptés à la constitution de pièces composites. Plus précisément, l'invention a pour objet des matériaux de renfort, adaptés à la réalisation de pièces composites en association avec une résine injectée ou infusée.

### Technique antérieure

La fabrication de pièces ou d'articles composites, c'est-à-dire comprenant, d'une part, un ou plusieurs renforts fibreux, notamment du type nappes fibreuses unidirectionnelles et, d'autre part, une matrice (qui est, le plus souvent, principalement de type thermodurcissable et peut inclure un ou plusieurs thermoplastiques) peut, par exemple, être réalisée par un procédé dit "direct" ou "LCM" (de l'anglais « Liquid Composite Moulding »). Un procédé direct est défini par le fait qu'un ou plusieurs renforts fibreux sont mis en œuvre à l'état "sec" (c'est-à-dire sans la matrice finale), la résine, ou matrice, étant mise en œuvre séparément, par exemple, par injection dans le moule contenant les renforts fibreux (procédé "RTM", de l'anglais « Resin Transfer Moulding »), par infusion au travers de l'épaisseur des renforts fibreux (procédé "LRI", de l'anglais « Liquid Resin Infusion » ou procédé "RFI", de l'anglais « Resin Film Infusion »), ou bien encore par enduction/imprégnation manuelle au rouleau ou au pinceau, sur chacune des couches unitaires de renforts fibreux, appliquées de manière successive sur la forme. Dans le cadre de fabrication de pièces composites notamment dans le domaine aéronautique, la cadence de production en série peut être élevée. Par exemple, pour la fabrication d'avions monocouloirs, les donneurs d'ordre aéronautiques souhaitent pouvoir réaliser plusieurs dizaines d'avions par mois. Les procédés directs tels que l'infusion ou l'injection sont des procédés de grands intérêts pouvant répondre à cette exigence.

Pour les procédés RTM, LRI ou RFI, il faut en général tout d'abord fabriquer une préforme fibreuse ou empilement de la forme de l'article fini désiré, puis imprégner cette préforme ou empilement d'une résine destinée à constituer la matrice. La résine est injectée ou infusée par différentiel de pressions en température, puis une fois que toute la quantité de résine nécessaire est contenue dans la préforme, l'ensemble est porté à une température plus élevée pour réaliser le cycle de polymérisation/réticulation et ainsi entraîner son durcissement.

Les pièces composites utilisées dans l'industrie automobile, aéronautique ou navale, sont en particulier soumises à des exigences très strictes, notamment en termes de propriétés mécaniques. Pour économiser en carburant et faciliter la maintenance des pièces, l'industrie aéronautique a remplacé de nombreux matériaux métalliques par des matériaux composites qui sont plus légers.

La résine qui est associée, notamment par injection ou infusion, aux renforts fibreux, lors de la réalisation de la pièce, peut-être une résine thermodurcissable, par exemple du type époxy (également nommé époxyde). L'inconvénient majeur de ces résines est leur fragilité, ce qui entraine une faible résistance à l'impact des pièces composites réalisées. Il a ainsi été proposé dans l'art antérieur d'associer les couches de renforts fibreux à des couches poreuses polymériques thermoplastiques, et notamment à un non-tissé (également nommé voile) de fibres thermoplastiques. De telles solutions sont notamment proposées dans les documents suivants : EP 1125728, WO 2006/096170 A1, US 6,828,016, US 2010/003881, WO 00/58083, WO 2007/015706, WO 2006/121961, US 6,503,856, US 2008/7435693, WO 2010/046609, WO 2010/061114, EP 2 547 816, US 2008/0289743, US 2007/8361262, US 2011/9371604 et WO 2011/048340.

Les renforts multiaxiaux, couramment nommés tissus non tissés (en anglais « non-crimp fabrics » NCF), sont également parfaitement adaptés aux procédés directs. De tels renforts multiaxiaux constitués d'un empilement de plusieurs nappes unidirectionnelles de fibres de renfort (en particulier, en carbone, verre ou aramide) disposées selon plusieurs orientations et cousues entre elles sont notamment décrits dans les demandes EP 2 547 816 et WO 2010/067003. Le plus souvent, là encore, des couches poreuses polymériques sont insérées au sein des NCF, pour améliorer les propriétés mécaniques, des pièces composites réalisées.

Ces solutions présentent néanmoins certains inconvénients. En effet, ces couches poreuses thermoplastiques utilisées ont le plus souvent une température de fusion élevée, en particulier supérieure à 150°C, ce qui rend le procédé de fabrication de ces matériaux de renfort couteux. De plus, la matière thermoplastique constitutive de la couche poreuse peut interagir avec la résine thermodurcissable injectée lors de la réalisation de pièces composites, ceci étant d'autant plus marqué que le point de fusion de la matière thermoplastique constitutive de la couche poreuse est bas.

Surtout, ces couches poreuses thermoplastiques sont la plupart du temps fusibles dans la résine, lors de la cuisson de la pièce composite. Les conséquences sont que les couches poreuses thermoplastiques peuvent modifier la stœchiométrie locale de la résine thermodurcissable et qu'elles peuvent se répandre dans les renforts fibreux lors de l'imprégnation de ces derniers par la résine thermodurcissable, ce que l'on veut éviter car cela entraine une altération des propriétés de résistance à la température des pièces obtenues. Ainsi, il est nécessaire de trouver un cycle de cuisson (défini comme la vitesse de montée en température jusqu'à la température de cuisson de la pièce et le temps de maintien à la température de cuisson) approprié pour permettre à la résine de gélifier à une température inférieure ou supérieure à la température de fusion des couches poreuses thermoplastiques, selon que l'on souhaite maintenir intacte ou altérer la couche poreuse thermoplastique, entrainant des propriétés finales différentes de la pièce obtenue.

Enfin, un autre inconvénient des couches poreuses thermoplastiques proposées dans l'art antérieur est la sensibilité des thermoplastiques utilisés à l'exposition prolongée à la température.

Pour tenter de pallier à ces inconvénients, d'autres solutions ont été proposées dans l'art antérieur : afin de pouvoir réaliser l'étape de mise en forme du renfort fibreux à moindre coût et en moins de temps, la demanderesse a proposé d'utiliser une poudre époxy telle que celle utilisée pour le tissu développé sous la référence Hexcel Primetex 43098 S 1020 S E01 1F, à la place d'une couche poreuse thermoplastique. Une telle couche thermodurcissable obtenue par dépôt d'une poudre époxy présentant une température de ramollissement de l'ordre de 100°C, permet de réaliser des pièces composites de manière plus rapide et moins couteuse, et en particulier à une température plus faible, puisqu'un préformage à basse température peut être réalisé. Néanmoins, une telle technique pose des problèmes pratiques dus à l'utilisation de poudre qui a tendance à venir encrasser les têtes de dépose des dispositifs de dépose automatisés utilisés et surtout ne permet pas d'obtenir des propriétés en termes de résistance mécanique satisfaisantes.

Il a également été proposé par la demanderesse, dans sa demande de brevet WO 2019/102136, d'associer les couches de renforts fibreux à des couches poreuses polymériques thermoplastiques partiellement réticulées sous irradiation, pour permettre de conserver les effets bénéfiques sur les performances mécaniques observées dans le cas de l'utilisation de matériaux de renfort comprenant une couche poreuse thermoplastique. En particulier, du fait de sa partie partiellement réticulée, la couche poreuse ne va être que partiellement fusible, voire totalement infusible, dans la résine thermodurcissable, ce qui permet d'éviter altération des propriétés de résistance à la température et à l'humidité. De plus, l'utilisation de telles couches poreuses polymériques thermoplastiques partiellement réticulées sous irradiation offrent des possibilités de réaliser le procédé de fabrication du matériau de renfort, et également sa mise en forme lors de la réalisation de pièces composites, à des températures inférieures à 130°C, préférentiellement inférieuresà 120°C. Cependant, la mise en œuvre d'un procédé d'irradiation permettant la réticulation partielle du matériau thermoplastique allonge le procédé global et en augmente les couts.

La présente invention se propose de fournir de nouveaux matériaux de renfort pour la réalisation de pièces composites par procédé direct, du type RTM notamment, qui permettent d'atteindre des performances mécaniques satisfaisantes, en particulier exigées par l'industrie aérospatiale et aéronautique et une bonne résistance aux sollicitations en température, sans les contraintes techniques que posent les solutions antérieures précédemment proposées dans la demande WO 2019/102136.

## Objet de l'invention

L'invention concerne un matériau de renfort comprenant au moins un renfort fibreux associé sur au moins une de ses faces à une couche poreuse thermoplastique, la ou lesdite(s) couche(s) poreuse(s) thermoplastique(s) représentant au plus 10% de la masse totale du matériau de renfort, de préférence de 0,5 à 10% de la masse totale du matériau de renfort, et préférentiellement de 2 à 6% de la masse totale du matériau de renfort, dans lequel ladite couche poreuse thermoplastique ou chacune desdites couches poreuses thermoplastiques présentes comprend un polymère thermoplastique dit réactif ou est constituée d'un ou plusieurs polymères thermoplastiques réactifs, un polymère thermoplastique réactif étant porteur de fonctions -NH2 en quantité supérieure à 0,15 meq/g de polymère thermoplastique réactif et/ou porteur de fonctions -COOH en quantité supérieure à 0,20 meq/g de polymère thermoplastique réactif.

Dans le cadre de l'invention, du fait des fonctions réactives -NH2 et COOH présentes en quantité suffisante sur le polymère thermoplastique réactif de la couche poreuse présente dans le matériau de renfort, ce dernier va pouvoir réagir de manière contrôlée avec des résines époxy, lors de la cuisson, ce qui va permettre de conserver une certaine intégrité à la couche thermoplastique, et ainsi permet de réduire la sensibilité à l'exposition en température, ainsi que d'améliorer les propriétés en température pour les matériaux de l'industrie aérospatiale.

De manière avantageuse, dans le matériau de renfort selon l'invention, ledit polymère thermoplastique réactif est porteur de fonctions -NH$_2$ en quantité supérieure à 0,20 meq/g de polymère thermoplastique réactif, de préférence dans la gamme allant de 0,20 à 1 meq/g de polymère thermoplastique réactif et préférentiellement dans la gamme allant de 0,20 à 0,95 meq/g de polymère thermoplastique réactif, et/ou est porteur de fonctions -COOH en quantité supérieure à 0,20 meq/g de polymère thermoplastique réactif, de préférence dans la gamme allant de 0,20 à 1 meq/g de polymère thermoplastique réactif et préférentiellement dans la gamme allant de 0,20 à 0,95 meq/g de polymère thermoplastique réactif.

Selon des modes de réalisation préférés, ledit polymère thermoplastique réactif de ladite ou desdites couche(s) poreuse(s) thermoplastique(s) présente(s) au sein du matériau de renfort a une température de fusion inférieure à 170°C, voire à 150°C et préférentiellement appartenant à la gamme allant de 100 à 140 °C, et de préférence à la gamme allant de 100 à 130°C.

En effet, la réaction du polymère thermoplastique de la couche poreuse avec la résine injectée ou infusée, va permettre d'utiliser une couche poreuse présentant une température de fusion basse, et ainsi permettre l'utilisation d'une température faible lors de la fabrication et, également, lors de la mise en forme du matériau de renfort, et donc un gain en termes de coût et de temps. Ainsi, un autre avantage est que la température de fusion dudit polymère thermoplastique réactif de la couche poreuse, va pouvoir être inférieure à 170°C, voire 150°C ou moins, permettant ainsi de réaliser toutes les étapes du procédé de fabrication, préalables à l'ajout de la résine nécessaire au final pour la réalisation de la pièce (de la préparation du matériau sec, en passant par sa dépose et son préformage), à une température inférieure à 170°C, et encore mieux inférieure à 150°C, voire moins. Ainsi, de telles couches poreuses comprenant un polymère thermoplastique réactif à plus faible point de fusion vont permettre la fabrication du matériau de renfort associant couche(s) poreuse(s) et renfort(s) fibreux à une température compatible avec des procédés de fabrication automatisée, notamment de placement de fibres et de formage à chaud de préformes déposées à plat.

La présente invention a donc pour objectif secondaire de combiner les effets bénéfiques de l'utilisation d'une couche poreuse thermoplastique sur les performances de résistance à l'impact, tout en ayant la possibilité de réaliser l'ensemble des étapes du procédé de fabrication préalables à l'infusion ou à l'injection de la résine, à des températures inférieures à 170°C, voire inférieures à 150°C ou 140°C, ces températures pouvant même être dans certains cas dans la gamme allant de 100 à 130°C, voire allant de 80 à 140 ou 130°C.

De manière particulièrement préférée dans le cadre de l'invention, dans le matériau de renfort, le polymère thermoplastique réactif est un polyamide ou un copolyamide porteur desdites fonctions -NH2 et/ou -COOH.

En particulier, la ou lesdites couche(s) poreuse(s) thermoplastique(s) présente(s) comporte(nt) des fonctions -NH$_2$ en quantité supérieure à 0,15 meq/g de couche poreuse et/ou des fonctions -COOH en quantité supérieure à 0,20 meq/g de couche poreuse.

Selon des modes de réalisation particuliers, le polymère thermoplastique réactif possède une masse moléculaire moyenne en nombre Mn supérieure à 4000 g/mol.

Dans les matériaux de renfort selon l'invention, le renfort fibreux peut prendre différentes formes. Selon certaines variantes de réalisation, le renfort fibreux est une nappe unidirectionnelle de fils de renfort, un tissu de fils de renfort ou un empilement de nappes unidirectionnelles de fils de renfort liées entre elles par couture ou tout autre moyen physique, notamment du type aiguilletage.

Le renfort fibreux peut, en particulier, être constitué de fibres de verre, de fibres d'aramide, ou, de préférence, de fibres de carbone.

Selon certains modes de réalisation, un matériau de renfort selon l'invention est constitué d'une nappe unidirectionnelle de fils de renfort correspondant au renfort fibreux, associée sur au moins une de ses faces à une couche poreuse thermoplastique telle que définie dans le cadre de l'invention, de préférence ledit matériau de renfort fibreux étant constitué d'une nappe unidirectionnelle de fils de renfort correspondant au renfort fibreux, associée sur chacune de ses faces à une couche poreuse thermoplastique telle que définie dans le cadre de l'invention et les couches poreuses thermoplastiques présentes sur chacune des faces de la nappe unidirectionnelle de fils de renfort étant identiques.

Ladite ou lesdites(s) couche(s) poreuse(s) thermoplastique(s) des matériaux de renfort selon l'invention peuvent avoir un caractère collant à chaud et l'association du renfort fibreux et de ladite couche poreuse a pu être réalisée grâce au caractère collant à chaud de ladite couche poreuse thermoplastique.

Selon certains modes de réalisation, un matériau de renfort selon l'invention est constitué d'un empilement de nappes unidirectionnelles de fils de renfort, en tant que renforts fibreux, orientées selon des directions différentes, avec au moins une couche poreuse thermoplastique telle que définie dans le cadre de l'invention, intercalée entre deux nappes unidirectionnelles de fils de renfort et/ou en surface de l'empilement. Un tel empilement peut être constitué d'une superposition de couches correspondant à un enchainement $(CP/R)_n(CP)_m$ ou $(CP/R/CP)_n$ avec CP qui désigne une couche poreuse thermoplastique telle que définie dans le cadre de l'invention, R une nappe unidirectionnelle, n un nombre entier supérieur ou égal à 1 et m qui est égal à 0 ou à 1. Dans de tels empilements, l'association des nappes unidirectionnelles de fils de renfort entre elles, voire leur association avec l'au moins une couche poreuse thermoplastique, peut être réalisée par couture, tricotage ou aiguilletage.

Dans les matériaux de renfort selon l'invention, la ou lesdite(s) couche(s) poreuse(s) thermoplastique(s) présente(s) est(sont), notamment, un film poreux, une grille, un dépôt de poudre, un tissu ou, de préférence, un non-tissé ou voile.

L'invention a également pour objet un procédé de préparation d'un matériau de renfort selon l'invention, caractérisé en ce qu'il comprend les étapes successives suivantes :

a1) disposer d'un renfort fibreux,
a2) disposer d'au moins une couche poreuse thermoplastique comprenant un polymère thermoplastique dit réactif, ou constituée d'un ou plusieurs polymères thermoplastiques réactifs, un polymère thermoplastique réactif étant porteur de fonctions -NH$_2$ en quantité supérieure à 0,15 meq/g de polymère thermoplastique réactif et/ou porteur de fonctions -COOH en quantité supérieure à 0,20 meq/g de polymère thermoplastique réactif,
a3) procéder à l'association du renfort fibreux et de l'au moins une couche poreuse thermoplastique.

Dans un tel procédé de préparation, l'association de l'étape a3) est, avantageusement, obtenue par application de l'au moins une couche poreuse thermoplastique sur le renfort fibreux, ladite application étant accompagnée ou suivie d'un chauffage dudit polymère thermoplastique réactif entrainant son ramollissement ou sa fusion, puis suivie d'un refroidissement, ledit chauffage étant de préférence réalisé à une température inférieure à 170°C, voire à 150°C et préférentiellement appartenant à la gamme allant de 80 à 140°C, notamment de 100 à 140 °C, et de préférence à la gamme allantde 80 à 130 ° C, notamment de 100 à 130 ° C. Bien entendu, le ou les polymères thermoplastiques de la couche poreuse thermoplastique sont choisis, de manière à obtenir leur ramollissement ou leur fusion, à une telle température.

L'invention a également pour objet une préforme constituée, au moins en partie, d'un ou plusieurs matériaux de renfort selon l'invention.

Un autre objet de l'invention concerne un procédé de fabrication d'une pièce composite à partir d'au moins un matériau de renfort selon l'invention, dans lequel une résine thermodurcissable époxy est injectée ou infusée au sein dudit matériau de renfort selon l'invention, d'un empilement de plusieurs matériaux de renfort selon l'invention, ou d'une préforme selon l'invention.

De manière avantageuse, le procédé de fabrication d'une pièce composite selon l'invention comprend une fois que la résine thermodurcissable époxy a été injectée ou infusée au sein dudit matériau de renfort ou dudit empilement, une étape de traitement thermique, comprenant un chauffage à une température Ta, conduisant à la réticulation de la résine époxy et à la consolidation de la pièce composite, lors de laquelle la résine époxy réagit avec au moins une partie des fonctions -NH2 et/ou -COOH présentes sur le polymère thermoplastique réactif de la ou des couche(s) poreuse(s) thermoplastique(s).

En particulier, la gélification de la résine époxy intervient lors de l'étape de traitement thermique et les fonctions -NH2 et/ou -COOH réagissent avec ladite résine, avant la gélification de cette dernière.

Selon une première variante de mise en œuvre du procédé de fabrication d'une pièce composite selon l'invention ladite température Ta est supérieure à la température de fusion dudit polymère thermoplastique réactif de ladite au moins une couche poreuse thermoplastique. En particulier, un chauffage à ladite température Ta est mené lors de l'étape de traitement thermique durant 5 minutes à 2 heures. Le plus souvent, l'étape de traitement thermique comprend une phase de montée en température, en particulier à une vitesse de 0,1 à 10°C/minute, jusqu'à ladite température Ta. Préférentiellement, la viscosité de la résine thermodurcissable époxy augmente entre la fusion dudit polymère thermoplastique réactif de ladite au moins une couche poreuse thermoplastique et l'initiation de la réticulation de la résine thermodurcissable époxy. Plus rigoureusement, on pourrait dire que la viscosité qui est augmentée est celle du système résultant de la réaction entre le polymère réactif de la couche poreuse thermoplastique et la résine époxy.

Selon la première variante de mise en œuvre, lors de l'étape de traitement thermique, la gélification de la résine thermodurcissable époxy intervient plus tôt que si cette dernière était soumise seule à l'étape de traitement thermique. En particulier, lors du chauffage à la température Ta, la gélification de la résine thermodurcissable époxy intervient, notamment, après une durée de chauffage de 5 minutes à 60 minutes.

Selon la première variante du procédé de fabrication d'une pièce composite selon l'invention où la température Ta est supérieure à la température de fusion dudit polymère thermoplastique réactif de ladite au moins une couche poreuse thermoplastique, la résine thermodurcissable présente, de préférence, une température de transition vitreuse Tg supérieure à 150°C.

Selon une deuxième variante de mise en œuvre du procédé de fabrication d'une pièce composite selon l'invention ladite température Ta est inférieure à la température de fusion dudit polymère thermoplastique réactif de ladite couche poreuse thermoplastique, et un chauffage à ladite température Ta. En particulier, un chauffage à ladite température Ta, pendant 5 minutes à 5 heures est mené lors de l'étape de traitement thermique. De préférence, la gélification de la résine thermodurcissable époxy intervient plus tôt que si cette dernière était soumise seule à l'étape de traitement thermique. Là encore, généralement, l'étape de traitement thermique comprend une phase de montée en température, en particulier à une vitesse de 0,1 à 10°C/minute, jusqu'à ladite température Ta.

Selon la deuxième variante du procédé de fabrication d'une pièce composite selon l'invention où la température Ta est inférieure à la température de fusion dudit polymère thermoplastique réactif de ladite au moins une couche poreuse thermoplastique, la résine thermodurcissable présente, de préférence, une température de transition vitreuse Tg au moins égale à 100°C, et avantageusement dans la gamme allant de 100 à 150°C

De manière avantageuse également, selon la deuxième variante du procédé de fabrication d'une pièce composite selon l'invention où la température Ta est inférieure à la température de fusion dudit polymère thermoplastique réactif de ladite au moins une couche poreuse thermoplastique, ledit polymère thermoplastique réactif a une température de fusion supérieure à 120°C.

Quelle que soit la variante de mise en œuvre du procédé de fabrication d'une pièce composite selon l'invention, la température Ta appartient à la gamme allant de 120 à 220°C, de préférence appartient à la gammeallant de 160 à 220° C, préférentiellement à la gamme allant de 170 à 190 °C, et est typiquement égale à 180°C.

De manière avantageuse, dans les procédés de fabrication d'une pièce composite selon l'invention, la résine thermodurcissable époxy a une viscosité inférieure à 1000 mPa.s à une température de 90°C.

Par ailleurs, les procédés de fabrication d'une pièce composite selon l'invention peuvent comprendre, préalablement à l'infusion ou à l'injection de ladite résine thermodurcissable époxy, un dépôt ou une mise en forme du(des)dit(s) matériau(x) de renfort, qui de préférence utilise le caractère collant à chaud de ladite au moins une couche poreuse thermoplastique présente dans le(s)dit(s) matériau(x) de renfort et met en œuvre un chauffage, de préférence, réalisé à une température inférieure à 170°C, voireà 150°C et préférentiellement appartenant à la gamme allant de 100 à 140 °C, et de préférence à la gamme allant de 100 à 130°C.

L'invention a également pour objet les pièces composites obtenues par un procédé de fabrication tel que défini dans le cadre de l'invention.

L'invention concerne donc des pièces composites qui comprennent une matrice époxy thermodurcie dans laquelle est inclus, au moins un matériau de renfort comprenant au moins un renfort fibreux associé sur au moins une de ses faces à une couche poreuse thermoplastique, la ou lesdite(s) couche(s) poreuse(s) thermoplastique(s) représentant au plus 10% de la masse totale du matériau de renfort, de préférence de 0,5 à 10% de la masse totale du matériau de renfort, et préférentiellement de 2 à 6% de la masse totale du matériau de renfort. Dans lesdites pièces composites, il existe des liaisons covalentes entre la matrice époxy thermodurcie et le polymère thermoplastique présent au sein de la ou des couche(s) poreuse(s) thermoplastique(s), lesdites liaisons covalentes résultant de la réaction de fonctions -NH2 et/ou-COOH qui étaient présentes sur ledit polymère thermoplastique et de la résine époxy.

**Définitions**

Par « couche poreuse », on entend une couche perméable permettant de laisser passer un liquide tel qu'une résine qui serait injectée ou infusée au travers du matériau lors de la constitution d'une préforme ou d'une pièce composite. En particulier, le facteur d'ouverture d'une telle couche appartient à la gamme allant de 30 à 99%, de préférence à la gamme allant de 40 à 70%. Un tel facteur d'ouverture, paramètre classique pour caractériser une telle couche poreuse, peut être déterminé selon toute technique connue de l'homme du métier, notamment selon la méthode décrite dans la demande WO 2011/086266. A titre d'exemple de couche poreuse, on peut citer les films poreux, les grilles réalisées par entrecroisement de fils, les couches obtenues par dépôt de poudre, les tissus et les non-tissés. Néanmoins, dans le cadre de l'invention, quel que soit le mode de réalisation décrit, on préférera utiliser une couche poreuse sous la forme d'un non-tissé, également nommé voile, qui permet de conduire à des pièces composites aux propriétés mécaniques particulièrement satisfaisantes.

La couche poreuse est dite thermoplastique, car elle contient un polymère thermoplastique et est, avantageusement, essentiellement constituée ou uniquement constituée d'un polymère thermoplastique ou d'un mélange de polymères thermoplastiques. Lorsque la couche poreuse comprend plusieurs polymères, ceux-ci peuvent être présents en mélange au sein de la couche, notamment au sein d'un film poreux, d'une poudre, ou de fibres formant la couche poreuse. Il est également possible d'utiliser des fibres présentant un cœur et une gaine autour du cœur, pour former la couche poreuse, le cœur et la gaine étant dans des polymères différents, et en particulier un ou plusieurs polymères thermoplastiques réactifs définis dans le cadre de l'invention formant la gaine. La couche poreuse peut également comprendre un liant thermoplastique en un ou plusieurs polymères thermoplastiques réactifs définis dans le cadre de l'invention, notamment de point de fusion plus bas que le reste du ou des polymères formant la couche poreuse. La couche poreuse est dite constituée essentiellement d'un polymère thermoplastique ou d'un mélange de tels polymères, si ledit polymère ou ledit mélange représente au moins 90% en masse, de préférence au moins 95% en masse de la masse de la couche poreuse thermoplastique. Dans la présente description, la couche poreuse thermoplastique pourra plus simplement être nommée « couche poreuse », par souci de simplicité. En particulier, la couche poreuse pourra être constituée essentiellement ou uniquement d'un polymère thermoplastique réactif, notamment choisi parmi les polyesters, copolyesters, polyamide-imides, polyéthersulfones, polyimides, polyéthercétones, polyméthacrylates de méthyle, polyéthers aromatiques, polyamides et copolyamides, qui sont porteurs de fonctions -NH2 en quantité supérieure à 0,15 meq/g de polymère thermoplastique réactif et/ou de fonctions -COOH en quantité supérieure à 0,20 meq/g de polymère thermoplastique réactif, ou d'un mélange de tels polymères. De tels polymères peuvent donc comprendre soit seulement des fonctions -NH2 en quantité supérieure à 0,15 meq/g de polymère thermoplastique réactif, soit seulement des fonctions -COOH en quantité supérieure à 0,20 meq/g de polymère thermoplastique réactif, soit des fonctions -NH2 en quantité supérieure à 0,15 meq/g de polymère thermoplastique réactif et des fonctions -COOH en quantité supérieure à 0,20 meq/g de polymère thermoplastique réactif.

Dans le cadre de l'invention, lorsqu'il est question de meq/g de polymère thermoplastique réactif, la masse de polymère thermoplastique réactif inclut les fonctions réactives présentes sur ledit polymère.

Dans le cadre de l'invention, par souci de simplicité, un polymère thermoplastique réactif, notamment choisi parmi les polyesters, copolyesters, polyamide-imides, polyéthersulfones, polyimides, polyéthercétones, polyméthacrylates de méthyle, polyéthers aromatiques, polyamides et copolyamides, qui sont porteurs de fonctions -NH2 en quantité supérieure à 0,15 meq/g de polymère thermoplastique réactif et/ou de fonctions -COOH en quantité supérieure à 0,20 meq/g de polymère thermoplastique réactif, pourra simplement être nommé polymère thermoplastique réactif. Ainsi, les polymères thermoplastiques réactifs sus-mentionnés peuvent être soit porteurs de fonctions -NH2 en quantité supérieure à 0,15 meq/g de polymère thermoplastique réactif, soit porteurs de fonctions -COOH en quantité supérieure à 0,20 meq/g de polymère thermoplastique réactif, soit porteurs à la fois de fonctions -NH2 en quantité supérieure à 0,15 meq/g de polymère thermoplastique réactif et de fonctions -COOH en quantité supérieure à 0,20 meq/g de polymère thermoplastique réactif. Dans les polymères thermoplastiques réactifs utilisés dans le cadre de l'invention, des fonctions -NH2 et/ou -COOH, que l'on peut qualifier de fonctions libres ou fonctions réactives, sont présentes sur ledit polymère thermoplastique en quantité suffisante, pour obtenir des réactions covalentes avec la résine époxy utilisée lors de la réalisation d'une pièce composite, de manière à garder l'intégrité ou une certaine intégrité de la couche poreuse thermoplastique, ou du moins limiter sa mobilité dans la résine infusée ou injectée lors de la réalisation ultérieure d'une pièce composite. Ainsi, il n'y a pas d'effets néfastes sur les propriétés mécaniques de la pièce composite obtenue.

En particulier, un polymère thermoplastique réactif utilisé dans le cadre de l'invention comprend des fonctions -COOH libres, en quantité supérieure à 0,20 meq/g de polymère thermoplastique réactif, notamment en quantité supérieure ou égale à 0,22 ; 0,25 ; 0,30 ou 0,40 meq/g de polymère thermoplastique réactif; de préférence dans la gamme allant de 0,20 à 1 meq/g de polymère thermoplastique réactif et préférentiellement dans la gamme allant de 0,20 à 0,95 meq/g de polymère thermoplastique réactif, notamment dans la gamme allant de 0,20 à 0,60 meq/g de polymère thermoplastique réactif, dans la gamme allant de 0,20 à 0,50 meq/g de polymère thermoplastique réactif, ou, de manière encore plus préférée, dans la gamme allant de 0,22 à 0,46 meq/g de polymère thermoplastique réactif. En particulier, un polymère thermoplastique réactif utilisé dans le cadre de l'invention comprend des fonctions -NH2 libres, en quantité supérieure à 0,20 meq/g de polymère thermoplastique réactif, notamment en quantité supérieure ou égale à 0,25 ; 0,30 ou 0,34 meq/g de polymère thermoplastique réactif ; de préférence dans la gamme allant de 0,20 à 1 meq/g de polymère thermoplastique réactif et préférentiellement dans la gamme allant de 0,20 à 0,95 meq/g, notamment dans la gamme allant de 0,20 à 0,60 meq/g de polymère thermoplastique réactif; dans la gamme allant de 0,30 à 0,50 meq/g de polymère thermoplastique réactif, dans la gamme allant de 0,30 à 0,40 meq/g de polymère thermoplastique réactif, ou, de manière encore plus préférée, dans la gamme allant de 0,32 à 0,36 meq/g de polymère thermoplastique réactif. Lesdites quantités de fonctions -COOH ou -NH2 peuvent être présentes seules ou ensemble, selon toutes les combinaisons possibles, sur un polymère thermoplastique réactif.

Il est également possible que la couche poreuse soit constituée essentiellement ou uniquement d'un ou plusieurs polymères thermoplastiques réactifs, en mélange avec un autre polymère thermoplastique dit additionnel. Dans ce cas, de préférence, la masse du ou des polymères thermoplastiques réactifs représente au moins 10 %, préférentiellement, au moins 70% de la masse totale de la couche poreuse thermoplastique. A titre d'exemple de polymères autres que les polymères thermoplastiques réactifs, on peut citer les polyamides, copolyamides, polyesters, copolyesters, polyamide-imides, polyéthersulfones, polyimides, polyéthercétones, polyméthacrylates de méthyle, et polyéthers aromatiques (ne comprenant pas de fonctions -NH2 ou -COOH ou comprenant de telles fonctions en quantité moindre que celles envisagées dans le cadre de l'invention)...

Ledit polymère thermoplastique dit additionnel peut avoir une température de fusion inférieure à 170°C, voire à 150°C et préférentiellement appartenant à la gamme allant de 100 à 140 °C, et de préférence à lagamme allant de 100 à 130°C. Dans de tels cas, de manière avantageuse, lacouche poreuse réactive est constituée à au moins 70% en masse, de préférence à au moins 80% en masse, et préférentiellement à au moins 90% en masse d'un ou plusieurs polymère(s) thermoplastique(s) réactif(s) tel(s) que défini(s) dans le cadre de l'invention.

Il est également possible d'utiliser des fibres présentant un cœur en un ou plusieurs polymère(s) thermoplastique(s) dit additionnel(s) ayant une température de fusion inférieure à 170°C, voire à 150°C et préérentiellement appartenant à la gamme allant de 100 à 140 °C, et de préférence à lagamme allant de 100 à 130°C, ledit cœur étant entouré d'une gaine, avec un ou plusieurs polymères thermoplastiques réactifs définis dans le cadre de l'invention qui constituent la gaine. Ledit polymère thermoplastique dit additionnel peut également avoir une température de fusion supérieure à 170°C, voire à 180°C et préférentiellement appartenant à la gamme allant de 180 à 220 °C. Dansde tels cas, de manière avantageuse, le ou les polymère(s) thermoplastique(s) réactif(s) tels que définis dans le cadre de l'invention pourront être présents au sein de la couche poreuse pour servir de liant, notamment pour lier la couche poreuse thermoplastique au renfort fibreux, et le ou les polymère(s) thermoplastique(s) réactif(s) tel(s) que défini(s) dans le cadre de l'invention pourra(ont) être présent(s) en quantité moindre au sein de la couche poreuse, notamment représenter de 10 à 30% de la masse de la couche poreuse.

Dans le cadre de l'invention, la matière polymérique constitutive de la couche poreuse est préférentiellement un polymère thermoplastique réactif ou un mélange de tels polymères thermoplastiques réactifs et non un mélange de l'un ou de plusieurs de ces polymères avec un autre polymère thermoplastique.

Dans le cadre de l'invention, et quelle que soit la variante de mise en œuvre, le polymère thermoplastique réactif est, de préférence, un polyamide ou un copolyamide, porteur de fonctions -NH2 en quantité supérieure à 0,15 meq/g de polymère thermoplastique réactif et/ou de fonctions -COOH en quantité supérieure à 0,20 meq/g de polymère thermoplastique réactif, et en particulier porteur de fonctions -NH2 et/ou -COOH dans les quantités précédemment spécifiées dans la description plus générale des polymères thermoplastiques réactifs.

Le polymère thermoplastique réactif utilisé dans le cadre de l'invention est porteur d'une quantité suffisante de fonctions réactives qui vont lui permettre de réagir avec des résines thermodurcissables époxy qui sont classiquement utilisées, lors de la réalisation de pièces composites. Comme cela va ressortir des exemples, une telle réaction va permettre de conférer des caractéristiques particulièrement avantageuse aux pièces composites obtenues, notamment d'améliorer les propriétés de résistance en température et en humidité, tout en conservant des propriétés mécaniques satisfaisantes d'importance pour les pièces composites destinées à l'industrie aéronautique et aérospatiale.

La quantité de fonctions réactives -COOH ou -NH2 présentes peut être évaluée par titrage potentiométrique : la quantité des fonctions -COOH est déterminée par dosage acido-basique de la couche poreuse par de l'hydroxyde de tetra-n-butylammonium $((C_4H_9)_4N^+OH^-)$ en solution alcoolique, celle des fonctions -NH2 est déterminée par dosage à l'acide perchlorique $(HClO_4)$ dans l'acide acétique, comme détaillé dans les exemples. Les résultats s'expriment en meq/g (milliéquivalent par gramme).

Le polymère thermoplastique réactif utilisé dans le cadre de l'invention est, avantageusement, un polyamide ou copolyamide. En particulier, le polymère thermoplastique réactif se présente sous la forme d'un polyamide ou copolyamide ramifié porteur d'une fonction -NH2 ou -COOH en bout de chaine des ramifications, de manière à atteindre les quantités de fonctions visées dans le cadre de l'invention. Il peut s'agir d'un polyamide 6 (polycaprolactame), 6.6 (nylon), 6.10 (polyhexaméthylène sébaçamide) 6.12 (polyhexaméthylène dodécanediamide) 11 (polyundécanamide), 12 (polylauroamide), notamment. De manière avantageuse, le polymère thermoplastique réactif appartient à la famille des copolyamides, et notamment des copolymères de caprolactame et/ou lauryllactame et/ou d'hexaméthylènediamine et d'acide adipique.

De tels polymères sont, en particulier, commercialisés par la société ARKEMA France, sous les références Platamid® HX2598 et H2651, par la société Evonik Industries AG (Allemagne), par la société Solvay (Belgique) ou par la société EMS-Grivory (Suisse).

De manière classique, comme par exemple décrit dans les demandes EP3197974, FR2883878 et US2010/0032629, les polyamides ou copolyamides peuvent être obtenus à partir de plusieurs matières premières : lactames, acides aminocarboxyliques, diamines ou triamines, acides dicarboxyliques...La production d'un copolyamide nécessite le choix d'au moins deux de ces produits. Les quantités de diamines et diacides utilisées permettent de moduler les fonctions amine et acide présentes dans le polyamide ou copolyamide.

A titre d'exemple de lactames, on peut citer ceux ayant de 3 à 12 atomes de carbone sur le cycle principal et pouvant être substitués. On peut citer par exemple le caprolactame, le capryllactame, le lauryllactame, l'amylolactame...

A titre d'exemple d'acides aminocarboxyliques, on peut citer l'acide amino-undécanoïque et l'acide aminododécanoïque.

A titre d'exemple d'acides dicarboxyliques, on peut citer l'acide adipique, l'acide isophtalique, l'acide sébacique, l'acide dodécanedioïque, l'acide théréphtalique...

A titre d'exemple de diamines, on peut citer celles ayant de 6 à 12 atomes de carbone, celles étant aryliques ou bien encore celles étant cycliques saturées. On peut citer par exemple l'hexaméthylènediamine, la tetraméthylène diamine, l'octaméthylène diamine, la décaméthylène diamine, la pipérazine...

A titre d'exemples d'enchainements copolyamides, on peut citer ceux de caprolactame et de lauryl lactame (6/12), ceux de caprolactame, de lauryl lactame et d'acide amino 11 undécanoïque (6/11/12), ceux de caprolactame, d'acide adipique et d'hexaméthylène diamine (6/66), ceux de caprolactame, de lauryllactame, d'acide adipique et d'hexaméthylène diamine (6/12/66), ceux de caprolactame, de lauryllactame, d'acide amino 11 undécanoïque, d'acide adipique et d'hexaméthylène diamine (6/66/11/12).

En particulier, des quantités adaptées d'acide tel que l'acide adipique (pour l'introduction de fonctions -COOH) et/ou d'amine telle que l'hexaméthylènediamine (pour l'introduction de fonctions amine) sont mises en jeu, afin de moduler et obtenir le nombre de fonctions réactives souhaitées.

De manière plus générale et pour l'ensemble des polymères thermoplastiques, une solution privilégiée permettant d'introduire des fonctions amine -NH2 ou acide -COOH est l'utilisation d'un traitement plasma. La mise en œuvre de tels traitements est notamment décrite dans les documents suivants : publication Grafting of Chemical Groups onto Polymers by Means of RF Plasma Treatments : a Technology for Biomedical Applications, P. Favia, R. d'Agostino, F. Palumbo, J. Phys. IV France 07 (1997) C4-199-C4-208 ; publication Plasma grafting - a method to obtain monofunctional surfaces, C. Oehr, M. Müller, B. Elkin, D. Hegemann, U. Vohrer, Surface and Coatings Technology Volumes 116-119, September 1999, Pages 25-35 ; US2021/0086226 ; ou encore WO 2019/243631 ....

Des polymères thermoplastiques comprenant le nombre de fonctions amine - NH2 et/ou acide -COOH souhaité ou bien sur lesquels le nombre de fonctions amine et/ou acide souhaité peut être modulé ou introduit par traitement plasma, notamment, sont disponibles dans le commerce.

S'agissant de polyesters ou copolyesters, de tels polymères sont par exemple commercialisés par les sociétés Evonik Industries AG (Allemagne), Eastmann Chemical Company (USA), Arkema (France), EMS-Grivory (Suisse), Toyobo (Japon).

S'agissant de polyamide-imides, de tels polymères sont par exemple commercialisés par les sociétés Solvay (Belgique), Toyobo (Japon), Mitsubishi Chemical (Suisse).

S'agissant de polyéthersulfones, de tels polymères sont par exemple commercialisés par les sociétés BASF (Allemagne), Sumitomo Chemical (Japon), Ensinger Plastics (Allemagne).

S'agissant de polyimides, de tels polymères sont par exemple commercialisés par les sociétés DuPont (USA), Evonik Industries AG (Allemagne), Huntsmann Corporation (USA).

S'agissant de polyéthercétones, de tels polymères sont par exemple commercialisés par les sociétés Arkema (France), Solvay (Belgique), Evonik Industries AG (Allemagne), Victrex (Royaume-Uni).

S'agissant enfin de polyméthacrylates de méthyle, de tels polymères sont par exemple commercialisés par les sociétés Evonik Industries AG (Allemagne) et Kuraray (Japon).

Le polymère thermoplastique réactif de la couche poreuse peut être un polymère amorphe, mais sera, de préférence, un polymère semi-cristallin. Avec les polymères semi-cristallins ayant une température de transition vitreuse inférieure à leur température de fusion, leur ramollissement pourra être obtenu plus facilement, ce qui permet de les associer plus aisément par collage au renfort fibreux, ou favorise la dépose et/ou le préformage du matériau de renfort selon l'invention, par la suite. De plus, les polymères semi-cristallins possèdent, notamment, une structure moléculaire organisée dans laquelle les chaînes sont alignées, ce qui leur confère des propriétés mécaniques supérieures aux polymères amorphes pour lesquels la structure moléculaire n'est pas organisé.

Lorsqu'il est question de la température de fusion d'un polymère ou d'une couche poreuse thermoplastique, il s'agit de la température de pic de fusion mesurée par calorimétrie différentielle à balayage (DSC en anglais pour « Differential Scanning Calorimetry ») avec une montée en température de 10°C/min.

Par « renfort fibreux associé sur au moins une de ses faces à une couche poreuse », on entend que le renfort fibreux est lié à au moins une couche poreuse qui est apposée sur une des faces de ce dernier. Une telle liaison sera en particulier réalisée par collage, notamment réalisée grâce au caractère collant à chaud de la couche poreuse, du fait de son caractère thermoplastique. Il est également possible, notamment dans le cas d'un empilement comprenant plusieurs renforts fibreux et plusieurs couches poreuses, que cette liaison soit complétée ou remplacée par une liaison mécanique du type couture, tricotage, ou par tout autre moyen physique (aiguilletage...).

Les matériaux de renfort selon l'invention peuvent être qualifiés de « secs », car ils sont destinés à être associés à un liant, en particulier à une résine thermodurcissable, pour la fabrication d'une pièce composite. Aussi, la masse de la ou des couches poreuses présentes dans le matériau de renfort selon l'invention, ne représente pas plus de 10% de la masse totale du matériau de renfort, et représente de préférence de 0,5 à 10%, et préférentiellement de 2 à 6% de la masse totale du matériau de renfort selon l'invention.

Plus généralement, les matériaux de renfort selon l'invention sont des matériaux, dits secs, c'est-à-dire qu'ils sont adaptés à la réalisation de pièces composites, en association avec une résine, en particulier thermodurcissable de type époxy. Un matériau de renfort selon l'invention comprend une part polymérique représentant au plus 10% de la masse totale du matériau de renfort, de préférence de 0,5 à 10% de la masse totale du matériau de renfort, et préférentiellement de 2 à 6% de la masse totale du matériau de renfort. Cette part polymérique comprend, voire est constituée, de la couche ou des couche(s) poreuse(s) thermoplastique(s) présente(s) dans le matériau de renfort selon l'invention.

En particulier, selon l'invention, la ou les couche(s) poreuse(s) thermoplastique(s) présente(s) dans le matériau de renfort, est(sont) constituée(s) d'un ou plusieurs polymère(s) thermoplastique(s) réactif(s), notamment choisi(s) parmi les polyesters, copolyesters, polyamide-imides, polyéthersulfones, polyimides, polyéthercétones, polyméthacrylates de méthyle, polyéthers aromatiques, polyamides et copolyamides tels que définis dans le cadre de l'invention, et de préférence, d'un ou plusieurs polymère(s) thermoplastique(s) réactif(s) choisi(s) parmi les polyamides et copolyamides tels que définis dans le cadre de l'invention.

Par « non-tissé », qui peut également être nommé « voile », on entend classiquement un ensemble de fibres continues ou courtes disposées aléatoirement. Ces non-tissés ou voiles pourront, par exemple, être produits par les procédés voie sèche (« Drylaid »), voie humide (« Wetlaid »), par voie fondue (« Spunlaid »), par exemple par extrusion (« Spunbond »), extrusion soufflage («Meltblown »), par projection fondue (« fiberized spray applicator ») ou par filage avec solvant (« electrospinning », « Flashspining », « Forcespinning »), bien connus de l'homme du métier. En particulier, les fibres constitutives du non-tissé peuvent présenter un diamètre moyen compris dans la gamme allant de 0,5 à 70 $\mu$m, et préférentiellement de 0,5 à 20 $\mu$m. Les non-tissés peuvent être constitués de fibres courtes ou, de préférence, de fibres continues. Dans le cas d'un non-tissé de fibres courtes, les fibres peuvent présenter, par exemple, une longueur comprise entre 1 et 100 mm. Les non-tissés offrent une couverture aléatoire et, de préférence, isotropique.

De manière avantageuse, le ou les non-tissés présent(s) dans les matériaux de renfort selon l'invention a(ont) une masse surfacique comprise dans la gamme allant de 0,2 à 20 g/m$^2$. L'épaisseur d'un non tissé dans les matériaux de renfort selon l'invention pourra varier en fonction du mode d'association au renfort fibreux. De façon préférée, le non-tissé ou chacun des non-tissés présent dans les matériaux de renfort selon l'invention a une épaisseur de 0,5 à 50 microns après association au renfort fibreux, de préférence de 3 à 35 microns, lorsque l'association se fait par application de chaleur et d'une pression, pour utiliser le caractère collant à chaud du non-tissé. Lorsque l'association se fait par un moyen mécanique, du type couture, tricotage ou aiguilletage, l'épaisseur du non-tissé pourra être supérieure à 50 microns, notamment dans la gamme allant de 50 à 200 microns. Les caractéristiques de ces non-tissés pourront être déterminées selon les méthodes décrites dans la demande WO 2010/046609.

Par « renfort fibreux », on entend une couche de fibres de renfort, pouvant se présenter sous la forme d'un tissu ou d'une nappe unidirectionnelle de fibres de renfort notamment. Les fibres de renfort sont, généralement, des fibres de verre, de carbone, d'aramide, de céramique, les fibres de carbone étant particulièrement préférées.

De manière classique, dans ce domaine, par « nappe ou couche unidirectionnelle de fibres de renfort », on entend une nappe constituée exclusivement ou quasi-exclusivement de fibres ou fils de renfort déposés selon une même direction, de manière à s'étendre de manière sensiblement parallèle les uns aux autres. Dans le cas d'une nappe de fils de renfort, ces derniers s'étendent selon des directions générales d'extension qui sont parallèles ou sensiblement parallèles. En particulier, selon un mode de réalisation particulier de l'invention, la nappe unidirectionnelle ne comporte aucun fil de trame venant entrelacer les fils ou fibres de renfort, ni même de couture qui aurait pour but de donner une cohésion à la nappe unidirectionnelle avant son association avec une autre couche, et notamment avec une couche poreuse thermoplastique. Ceci permet en particulier d'éviter toute ondulation au sein de la nappe unidirectionnelle. Une nappe unidirectionnelle de fibres de renfort peut être constituée d'un seul fil, même si elle sera le plus souvent constituée de plusieurs fils alignés disposés côte à côte. Les fils sont disposés de manière à assurer une couverture totale ou quasi-totale sur toute la surface de la nappe. Dans ce cas, dans chacune des nappes constitutives du matériau intermédiaire, les fils sont, de préférence, disposés bord à bord, en minimisant, voire évitant tout manquement de matière (« gap » en anglais) ou chevauchement (« overlap » en anglais).

Dans la nappe unidirectionnelle, le ou les fils de renfort sont, de préférence, non associés à un liant polymérique et donc qualifiés de secs, c'est-à-dire qu'ils ne sont ni imprégnés, ni enduits, ni associés à un quelconque liant polymérique avant leur association à une ou aux couches poreuses thermoplastiques. Les fibres de renfort sont, néanmoins, le plus souvent caractérisées par un taux massique d'ensimage standard pouvant représenter au plus 2% de leur masse. Ceci est particulièrement adapté à la réalisation de pièces composites par diffusion de résine, selon les procédés directs. Dans la nappe unidirectionnelle, le ou les fils de renfort peuvent être des fils torsadés.

Les fibres constitutives des renforts fibreux utilisés dans le cadre de l'invention sont, de préférence, continues. Les renforts fibreux sont en général constitués de plusieurs fils.

En particulier, un fil de carbone est constitué d'un ensemble de filaments et comporte, en général, de 1 000 à 80 000 filaments, avantageusement de 12 000 à 24 000 filaments. De façon, particulièrement préférée, dans le cadre de l'invention, des fils de carbone de 1 à 24 K, par exemple, de 3K, 6K, 12K ou 24K, et préférentiellement de 12 et 24K, sont utilisés. Par exemple, les fils de carbone présents au sein des renforts fibreux utilisés dans le cadre de l'invention présentent un titre de 60 à 3800 Tex, et préférentiellement de 400 à 900 tex. Un renfort fibreux peut être réalisé avec tout type de fils de carbone, par exemple, des fils Haute Résistance (HR) dont le module en traction est compris entre 220 et 241 GPa et dont la contrainte à la rupture en traction est comprise entre 3450 et 4830MPa, des fils de Module Intermédiaire (IM) dont le module en traction est compris entre 290 et 297GPa et dont la contrainte à la rupture en traction est comprise entre 3450 et 6200MPa et des Fils Haut Module (HM) dont le module en traction est compris entre 345 et 448GPa et dont la contrainte à la rupture en traction est comprise entre 3450 et 5520Pa (d'après le « ASM Handbook », ISBN 0-87170-703-9, ASM International 2001). Dans le cas où la nappe unidirectionnelle de renfort est constituée de fils de carbone, celle-ci pourra présenter un grammage, notamment, dans la gamme allant de 126g/m$^2$ à 500g/m$^2$, en particulier de 126 à 280 g/m$^2$.

**Matériau de renfort selon l'invention**

L'invention peut être déclinée pour différents types de matériaux de renfort : des matériaux de renfort simples comprenant un seul renfort fibreux destinés à être empilés les uns sur les autres, ou bien des matériaux de renfort plus complexes comprenant plusieurs renforts fibreux superposés, qui peuvent être utilisés seuls ou également sous la forme d'empilement.

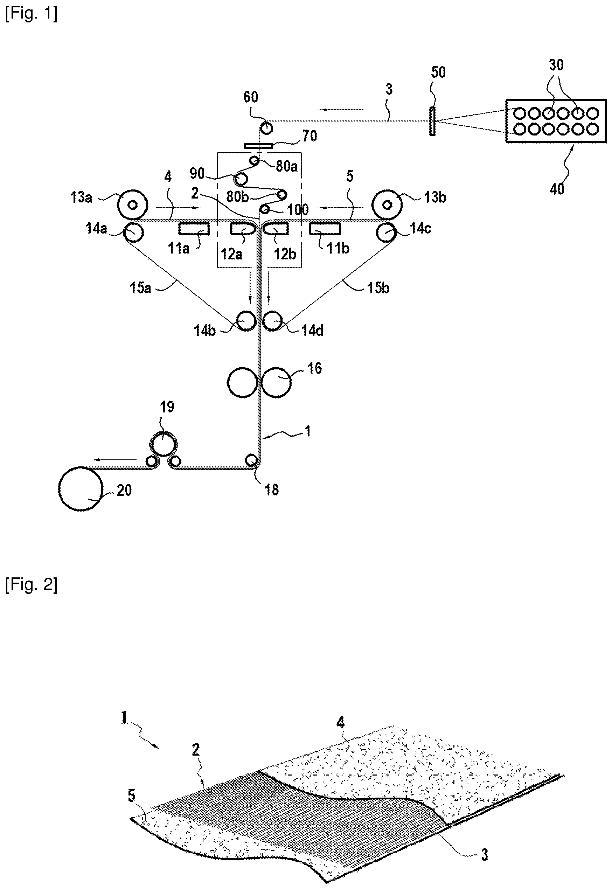

En particulier, à titre d'exemple de matériaux de renfort simples, on peut citer ceux constitués d'une nappe unidirectionnelle de fibres de renfort correspondant au renfort fibreux, associée sur au moins une de ses faces à une couche poreuse thermoplastique comprenant ou constituée d'un polymère thermoplastique réactif telle que prévue dans le cadre de l'invention. De manière à avoir un matériau symétrique 1 tel qu'illustré figure 1, le renfort fibreux, et en particulier la nappe unidirectionnelle 2 de fibres de renfort 3, est associé sur chacune de ses faces à une couche poreuse thermoplastique 4,5 comprenant ou constituée d'un ou plusieurs polymères thermoplastiques réactifs telle que prévue dans le cadre de l'invention et les couches poreuses présentes sur chacune des faces de la nappe unidirectionnelle de fibres de renfort sont, de préférence, identiques. Dans le cadre de l'invention, la couche poreuse thermoplastique comprenant ou constituée d'un ou plusieurs polymères thermoplastiques réactifs présente un caractère collant à chaud et l'association du renfort fibreux et de la couche poreuse thermoplastique sera avantageusement réalisée grâce au caractère collant à chaud de la couche poreuse. Ce caractère collant résulte du caractère thermoplastique de la couche poreuse. Bien entendu, il peut également être prévu, de remplacer, voire de compléter cette association utilisant le caractère collant à chaud de la couche poreuse, par couture ou tricotage, ou par tout autre moyen du type liaison physique (aiguilletage...).

Le matériau de renfort peut également se présenter sous la forme d'un empilement de tels matériaux de renfort, à savoir (CP/R/CP)ₙ avec CP qui désigne une couche poreuse thermoplastique comprenant ou constituée d'un ou plusieurs polymères thermoplastiques réactifs tels que définis dans le cadre de l'invention, et en particulier un non-tissé, et R une nappe unidirectionnelle, avec n qui est un nombre entier supérieur ou égal à 1. De préférence, toutes les couches poreuses thermoplastiques CP présentent un grammage identique, voire même sont identiques et/ou tous les renforts fibreux R ont un grammage identique, voire sont identiques. Il est également possible que les deux couches externes CP de l'empilement aient un grammage qui soit égal au double grammage des autres couches CP, dites internes.

A titre d'exemple de matériaux de renfort plus complexes, on peut citer ceux constitués d'un empilement de nappes de fibres de renfort unidirectionnelles orientées selon des directions différentes, avec au moins une couche poreuse thermoplastique comprenant ou constituée d'un ou plusieurs polymères thermoplastiques réactifs telle que prévue dans le cadre de l'invention intercalée entre deux nappes unidirectionnelles de fibres de renfort et/ou en surface de l'empilement. Selon une première variante, un tel matériau peut être constitué d'un empilement correspondant à un enchainement (CP/R)ₙ ou (CP/R)ₙ/CP avec CP qui désigne une couche poreuse thermoplastique comprenant ou constituée d'un polymère thermoplastique réactif tel que défini dans le cadre de l'invention, R une nappe unidirectionnelle telle que décrite dans le cadre de l'invention et n désignant un nombre entier, avec de préférence toutes les couches CP qui présentent un grammage identique, voire même qui sont identiques. En particulier, dans de tels empilements, les renforts fibreux R sont des nappes unidirectionnelles de fibres de renfort, et en particulier, de fibres de carbone, de préférence de grammage identique. De tels matériaux sont qualifiés de NCF (de l'anglais « Non-crimp fabric »). De manière classique dans ce domaine des NCF, l'association de nappes unidirectionnelles de fibres de renfort entre elles et avec la ou les couches poreuses thermoplastiques présentes est réalisée par couture ou tricotage. Bien entendu, il pourra être prévu, de remplacer, voire de compléter cette association par couture ou tricotage, par une adhésion réalisée grâce au caractère collant à chaud de la couche poreuse thermoplastique, ou par tout autre moyen du type liaison physique (aiguilletage...).

En particulier, dans le cas des NCF, le matériau de renfort selon l'invention est composé de nappes unidirectionnelles s'étendant selon des orientations différentes choisies parmi les angles 0°, 30°, 45°60°, 90°, 120°, 135°. Toutes les nappes unidirectionnelles peuvent présenter des orientations différentes ou seulement certaines d'entre elles. A titre d'exemple, le matériau de renfort selon l'invention pourra être réalisé selon les empilements suivants : 0°/90°, 90°/0°, 45°/135°, 135/45°, 90°/0°/90°, 0°/90°/0°, 135°/45°/135°/, 45°/135°/45°, 0°/45°/90°, 90°/45°/0°, 45°/0°/90°, 90°/0°/45°, 0°/135°/90°, 90°/135°/0°, 135°/0°/90°, 90°/0°/135°, 45°/0°/135°, 135°/0°/45°, 45°/135°/0, 0°/135°/45°, 45°/135°/90°, 90°/135°/45°, 135°/45°/0°, 0°/45°/135°, 135°/45°/90°, 90°/45°/135°, 60°/0°/120°, 120°/0°/60°, 30°/0°/150°, 150°/0°/30°, 135°/0°/45°/90°, 90°/45°/0°/135°, 45°/135°/0°/90°, 90°/0°/135°/45°, 0°/45°/135°/90°, 90°/135°/45°/90°, 90°/135°/0°/45°, 45°/0°/135°/90°, le 0° correspond la direction d'avancement de la machine permettant de réaliser le matériau de renfort selon l'invention. Dans le cas d'une association par couture ou tricotage, la direction générale des fils de couture ou tricotage correspondra également, en général, au 0°. La réalisation de tels multiaxiaux est connue et met en œuvre des techniques classiques par exemple décrites dans l'ouvrage « Textile Structural Composites, Composite Materials Series Volume 3 » de Tsu Wei Chou & Franck.K.Ko, ISBN 0-444-42992-1, Elsevier Science Publishers B.V., 1989, Chapitre 5, paragraphe 3.3 ou dans le brevet FR2761380 qui décrit un procédé et un dispositif pour la réalisation de nappes fibreuses multiaxiales. Notamment, les nappes unidirectionnelles peuvent être constituées avant, ou déposées en ligne, au moment de la constitution du multiaxial. La liaison par couture ou tricotage entre les différentes nappes unidirectionnelles peut être réalisée selon des points de couture ou tricotage, s'étendant sur des lignes parallèles entre elles. Notamment, les points de couture ou tricotage sont espacés, au sein d'une même ligne selon un pas, de préférence identique, de 1 à 20 mm, de préférence de 2 à 12 mm. De même, deux lignes de couture ou tricotage consécutives sont, par exemple, espacées l'une de l'autre de 2 à 50 mm, de préférence de 5 à 15 mm. De préférence, toutes les lignes consécutives de couture d'une série de lignes parallèles entre elles seront espacées d'une distance identique. A titre d'exemple de matériau constitutif du fil de couture particulièrement adapté dans le cadre de l'invention, on peut citer les polyesters, les copolyesters, les polypropylènes (PP), les polyéthylènes (PE), les polysulfures de phénylène (PPS), les polyéthylènes naphtalates (PEN), les polymères à cristaux liquides (LCP), les polycétones, les polyamides, les thermoplastiques pouvant être réticulés, le carbone, le verre, le basalte, la silice, et leur mélange. Le polyéthylène téréphtalate, polybutylène téréphtalate, polytriméthylène téréphtalate, acide polylactique et leurs copolymères sont des exemples de polyesters pouvant être mis en œuvre. Le fil présentera, par exemple, un titre dans la gamme allant de 5 à 150 dTex, notamment inférieur à 30 dTex, par exemple déterminé selon la norme EN ISO 2060. Pour plus de détails sur les constructions utilisables dans les matériaux de type NCF, on pourra se référer aux documents EP 2547816 ou WO 2010/067003 notamment.

Quel que soit l'agencement des matériaux de renfort selon l'invention, selon des modes de réalisation particuliers, la ou lesdites couche(s) poreuse(s) thermoplastique(s) présente(s) comporte(nt) des fonctions -NH₂ en quantité supérieure à 0,15 meq/g de couche poreuse et/ou des fonctions -COOH en quantité supérieure à 0,20 meq/g de couche poreuse. En particulier, la ou lesdites couche(s) poreuse(s) thermoplastique(s) présente(s) comprend(nent) des fonctions -COOH libres, en quantité supérieure à 0,20 meq/g de couche poreuse thermoplastique, notamment en quantité supérieure ou égale à 0,22 ; 0,25 ; 0,30 ou 0,40 meq/g de couche poreuse thermoplastique ; de préférence dans la gamme allant de 0,20 à 1 meq/g de couche poreuse thermoplastique et préférentiellement dans la gamme allant de 0,20 à 0,95 meq/g de couche poreuse thermoplastique, notamment dans la gamme allant de 0,20 à 0,60 meq/g de couche poreuse thermoplastique, dans la gamme allant de 0,20 à 0,50 meq/g de couche poreuse thermoplastique, ou, de manière encore plus préférée, dans la gamme allant de 0,22 à 0,46 meq/g de couche poreuse thermoplastique. En particulier, la ou lesdites couche(s) poreuse(s) thermoplastique(s) présente(s) comporte(nt) des fonctions -NH2 libres, en quantité supérieure à 0,20 meq/g de couche poreuse thermoplastique, notamment en quantité supérieure ou égale à 0,25 ; 0,30 ou 0,34 meq/g de couche poreuse thermoplastique ; de préférence dans la gamme allant de 0,20 à 1 meq/g de couche poreuse thermoplastique et préférentiellement dans la gamme allant de 0,20 à 0,95 meq/g de couche poreuse thermoplastique, notamment dans la gamme allant de 0,20 à 0,60 meq/g de couche poreuse thermoplastique ; dans la gamme allant de 0,30 à 0,50 meq/g de couche poreuse thermoplastique, dans la gamme allant de 0,30 à 0,40 meq/g de couche poreuse thermoplastique, ou, de manière encore plus préférée, dans la gamme allant de 0,32 à 0,36 meq/g de couche poreuse thermoplastique. Lesdites quantités de fonctions -COOH ou -NH2 peuvent être présentes seules ou ensemble, selon toutes les combinaisons possibles, sur une couche poreuse thermoplastique.

**Procédé de préparation d'un matériau de renfort selon l'invention**

Dans le cadre de l'invention, un matériau de renfort selon l'invention peut être préparé, par mise en œuvre des étapes successives suivantes :

a1) disposer d'un renfort fibreux,
a2) disposer d'au moins une couche poreuse thermoplastique comprenant ou constituée d'un polymère thermoplastique réactif tel que défini dans le cadre de l'invention,
a3) procéder à l'association du renfort fibreux et de l'au moins une couche poreuse thermoplastique.

En particulier, l'étape a3) pourra être obtenue par application de au moins une couche poreuse thermoplastique sur le renfort fibreux, ladite application étant le plus souvent accompagnée ou suivie d'un chauffage entrainant le ramollissement ou la fusion dudit polymère thermoplastique réactif de ladite au moins une couche poreuse thermoplastique, puis suivie d'un refroidissement. En particulier, une telle association peut être obtenue à une température de 22 à 200°C, de préférence de 50 à 180°C et est réalisée sous air ambiant, et par application de la couche poreuse thermoplastique sur le renfort fibreux, par exemple, en exerçant une pression sur cette dernière. De manière avantageuse, ledit polymère thermoplastique réactif de la ou lesdites couche(s) poreuse(s) thermoplastique(s) présente(s) au sein du matériau de renfort a une température de fusion inférieure à 170°C, voire à 150°C et préérentiellement appartenant à la gamme allant de 100 à 140 °C, et de préférence à lagamme allant de 100 à 130°C. En particulier, la(es) dite(s) couche(s) poreuse(s) thermoplastique(s) présente(s) a(ont) une température de fusion qui est inférieure à 170°C, voire à 150°C et préférentiellement appartenant à la gammeallant de 100 à 140 °C, et de préférence à la gamme allant de 100 à 130°C. Avec de tels polymères thermoplastiques réactifs, l'association de la couche poreuse thermoplastique et du renfort fibreux utilisant le caractère collant à chaud de la couche poreuse thermoplastique peut être réalisée par chauffage à une température inférieure à 170°C, voire à 150°C et préférentiellement apparterant à la gamme allant de 100 à 140 °C, et de préférence à la gamme allant de 100 à 130°C.

L'étape a3) pourra également être réalisée par couture, tricotage, aiguilletage ou tout autre moyen adapté permettant de lier entre eux le renfort fibreux et la couche poreuse thermoplastique.

En particulier, lorsque le renfort fibreux selon l'invention correspond à un empilement de nappes unidirectionnelles de fils de renfort liées entre elles par couture ou tout autre moyen physique, notamment du type aiguilletage, l'étape a1) consiste à disposer de plusieurs renfort fibreux qui sont des nappes unidirectionnelles de fils de renfort, l'étape a3) lors de laquelle il est procédé à l'association desdits renforts fibreux et de l'au moins une couche poreuse thermoplastique comprend la constitution d'un empilement de nappes unidirectionnelles de fils de renfort et de ladite au moins une couche poreuse thermoplastique et la réalisation de empilement de nappes unidirectionnelles de fils de renfort liées entre elles par couture ou tout autre moyen physique, notamment du type aiguilletage. L'étape a » peut comprendre à la fois une association réalisée par couture, tricotage, aiguilletage ou tout autre moyen adapté permettant de lier entre eux le renfort fibreux et la couche poreuse thermoplastique et une association par application de l'au moins une couche poreuse thermoplastique sur au moins une des nappes unidirectionnelles de fils de renfort, ladite application étant le plus souvent accompagnée ou suivie d'un chauffage entrainant le ramollissement ou la fusion dudit polymère thermoplastique réactif de ladite au moins une couche poreuse thermoplastique, ledit chauffage étant suivi d'un refroidissement.

Dans le cas de matériaux plus complexes comprenant au moins une couche poreuse thermoplastique comprenant ou constituée d'un ou plusieurs polymères thermoplastiques réactifs telle que prévue dans le cadre de l'invention, entre deux renforts fibreux, et en particulier, dans le cas des NCF, le procédé comprendra la réalisation d'un empilement des différentes couches, et notamment selon un enchaînement $(CP/R)_n$ ou $(CP/R)_n/CP$, tel que précédemment défini, avec n supérieur à 1 et l'association des différentes couches entre elles pourra être complétée ou réalisée par une opération de couture, tricotage, aiguilletage ou autre moyen d'assemblage mécanique.

Bien entendu, quel que soit le procédé de préparation utilisé, la couche poreuse et le matériau de renfort seront choisis, de façon qu'au final, la ou les couche(s) poreuse(s) thermoplastique(s) représente(nt) au plus 10% de la masse totale du matériau de renfort, de préférence de 0,5 à 10% de la masse totale du matériau de renfort, et préférentiellement de 2 à 6% de la masse totale du matériau de renfort obtenu.

Les caractéristiques du procédé sont en lien avec les caractéristiques des matériaux de renfort tels que décrits dans le cadre de l'invention.

**Utilisation et procédé utilisant un matériau de renfort selon l'invention pour la fabrication d'une préforme ou d'une pièce composite**

Les matériaux de renfort de l'invention comprenant un renfort fibreux associé sur au moins une de ses faces à une couche poreuse thermoplastique comprenant un polymère thermoplastique réactif tel que défini dans le cadre de l'invention, notamment choisi parmi les polyesters, copolyesters, polyamide-imides, polyéthersulfones, polyimides, polyéthercétones, polyméthacrylates de méthyle, polyéthers aromatiques, polyamides et copolyamides, qui sont porteurs de fonctions -NH2 en quantité supérieure à 0,15 meq/g de polymère thermoplastique réactif et/ou de fonctions -COOH en quantité supérieure à 0,20 meq/g de polymère thermoplastique réactif, dit polymère thermoplastique réactif, sont parfaitement adaptés, pour la réalisation d'une préforme ou d'une pièce composite, en association avec une résine thermodurcissable époxy.

La résine diffusée ou injectée au sein du matériau de renfort ou d'un empilement de matériaux de renfort selon l'invention est une résine thermodurcissable époxy. A titre d'exemple de résine époxy, on peut citer les dérivés polyglycidyles de diamine aromatique, les amines primaires mono aromatiques, les aminophénols, les acides polycarboxyliques. On peut également citer les éthers polyglycidiques de bisphénols tels que bisphénol A, bisphénol F, bisphénol S et bisphénol K. De nombreuses résines époxy adaptées à la réalisation de pièces composites par procédé direct sont disponibles dans le commerce, notamment auprès des sociétés Solvay, Hexion et Hexcel Composites. A titre d'exemples, on peut citer les résines RTM6 et HF620 de la société Hexcel Composites et les résines EP2400 et EP2410 de la société Solvay. Ces résines sont composées d'un mélange de résines époxy, associé à un mélange d'un ou plusieurs agents durcisseurs et éventuellement d'un ou plusieurs modifiant(s) choc.

D'autres résines époxy disponibles commercialement incluent le N,N,N',N'-tetraglycidil diamino diphénylméthane (MY9663, MY720, MY721 d'Huntsman), les éthers triglycidiques de p-aminophénol (tels que MY0510 d'Huntsman), les éthers triglycidiques de m-aminophénol (tel que MY0600 d'Huntsman) ou encore les époxides bifonctionnels (tels que GY285 et CY184 d'Huntsman).

Les résines thermodurcissables époxy peuvent être tetra-, tri- ou bifonctionnelles, l'augmentation du nombre de fonctionnalités époxy conduisant naturellement à une cinétique de la réaction de réticulation plus élevée. Une telle résine thermodurcissable époxy comprend, et ce de manière classique, un ou plusieurs agents durcisseurs, bien connus de l'homme du métier pour être utilisés avec les polymères thermodurcissables du type époxy sélectionnés. Des exemples d'agents durcisseurs préférentiellement utilisés incluent les cyanoguanidines, les amines aromatiques, aliphatiques et alicycliques, les anhydrides d'acide, les acides de Lewis, les urées substituées, les imidazoles, les hydrazines et les silicones. Une résine époxy peut également comprendre, et ce de manière classique pour l'homme du métier, un modifiant choc ou agent de ténacité de type « core-shell ». A titre d'exemple, on peut citer les modifiants choc Kane Ace MX de Kaneka (Japon), ou encore les modifiants choc Clearstrength de Arkema France. Le procédé selon l'invention trouve un intérêt tout particulier, du fait que la résine injectée ou infusée est une résine thermodurcissable, du type époxy. En effet, les résines époxy ont la capacité de réagir avec les fonctions -NH2 ou -COOH présentes en quantité suffisante au niveau des couches poreuses thermoplastiques des matériaux selon l'invention. Une telle réaction va ainsi éviter que le polymère thermoplastique de la ou des couche(s) poreuse(s) présente(s) ne se répande dans la résine injectée ou infusée et vienne altérer les propriétés de cette dernière, notamment en termes de thermorésistance.

De manière préférée, dans le cadre de l'invention, on utilisera une résine époxy comprenant un époxy tétrafonctionnel, éventuellement en mélange avec un époxy trifonctionnel, un ou plusieurs agents durcisseurs et un ou plusieurs modifiant(s) choc.

De manière avantageuse, les résines thermodurcissables époxy utilisées dans le cadre de l'invention présente une Tg supérieure de 100°C ou plus, voire supérieure à 150°C. Le choix de la Tg de la résineutilisée pourra notamment être adapté par l'homme du métier, en fonction des étapes du procédé mis en œuvre et de s'il souhaite réaliser le chauffage à une température Ta inférieure ou supérieure à la température de fusion du polymère thermoplastique réactif.

La réalisation d'une pièce composite est, de manière classique réalisée dans un moule (ouvert ou fermé). Avant son introduction dans le moule, la résine peut être préalablement chauffée. Avant son infusion ou son injection au sein du matériau de renfort, de l'empilement ou de la préforme, la résine peut notamment être préalablement chauffée, à une température de 60 à 90°C.

La résine injectée ou infusée a, de préférence, une viscosité inférieure à 1000 mPa.s à la température d'introduction de la résine dans le moule. De préférence, la résine thermodurcissable utilisée a une viscosité inférieure à 1000 mPa.s à une température de 90°C. En général, lors de la fatrication de pièces composites, la température d'infusion ou d'injection d'une résine thermodurcissable dans le moule varie, le plus souvent, de 90 à 180°C. Dans le cadre de l'invention, la viscosité peut être mesurée avec un rhéomètre à cisaillement dynamique selon la norme EN6043, à la différence près que la déformation est de 4% et non 10%. En particulier, la mesure est effectuée avec un entrefer de 0,5mm, un contrôle de déformation à 4% et une fréquence de 10 rad/s, la vitesse de chauffe pour une isotherme étant de 2°C/min.

De manière classique, dans un procédé de fabrication d'une préforme ou d'une pièce composite à partir d'au moins un matériau de renfort selon l'invention, une résine thermodurcissable, thermoplastique ou un mélange de résines thermodurcissable et thermoplastique, et en particulier une résine thermodurcissable époxy, notamment telle que définie dans le cadre de l'invention, est injecté(e) ou infusé(e) au sein dudit matériau de renfort, ou d'un empilement de plusieurs matériaux de renfort, ou encore d'une préforme réalisée à partir dudit matériau. On entend par préforme un matériau de renfort, ou un ensemble de matériaux de renfort, qui a subi une opération de mise en forme préalable, avant sa disposition dans le moule ou outillage utilisé pour réaliser la pièce composite.

Pour la réalisation de pièces composites, un empilement ou drapage de matériaux de renfort selon l'invention (également nommés plis) est réalisé. De manière classique, un matériau de renfort selon l'invention est découpé à la dimension souhaitée, pour la réalisation de la pièce, du pli, de l'empilement ou de la préforme à réaliser. Dans un empilement, plusieurs matériaux ou plis de matériaux de renfort sont empilés, les uns sur les autres.

Un pli peut être constitué d'un seul matériau de renfort selon l'invention, lorsque celui-ci a une largeur suffisante pour la réalisation de la pièce souhaitée et que la pièce est peu complexe. Mais le plus souvent, dans le cas de pièces de grande dimension, ou de pièces complexes, un pli est constitué d'un ensemble de matériaux de renfort selon l'invention qui sont disposés côte à côte, pour couvrir toute la surface nécessaire à la réalisation de la pièce souhaitée.

Dans le cadre de l'invention, du fait du caractère thermoplastique de la couche poreuse présente dans le matériau de renfort, préalablement à l'infusion ou à l'injection de la résine, un dépôt ou une mise en forme utilisant le caractère collant à chaud de ladite au moins une couche poreuse présente dans le matériau de renfort pourra être mise en œuvre, lors de la réalisation de la préforme ou de la pièce composite. De manière avantageuse, les procédés de fabrication d'une préforme ou d'une pièce composite, comprennent une étape de dépose ou de mise en forme d'un matériau selon l'invention, dans laquelle, la couche poreuse est chauffée à une température entrainant la fusion au moins partielle dudit polymère thermoplastique réactif de la ou des couches poreuses définie(s) dans le cadre de l'invention, et en particulier à une température inférieure à 170°C, voire à 150°C et préférentiellement appartenant à la gamme allant de 100 à 140 °C, et de préférence à la gammeallant de 100 à 130°C.

Les étapes utilisées pour la fabrication de la pièce composite sont tout à fait classiques pour l'homme du métier. Il est possible de réaliser, intermédiairement, une préforme plane, voire une préforme selon une forme tridimensionnelle souhaitée. En particulier, le dépôt d'un matériau de renfort selon l'invention peut être réalisé en continu avec application d'une pression perpendiculaire à la surface de dépose, afin de l'appliquer sur celle-ci. De tels procédés connus sous les abréviations AFP (de l'anglais Automated Fiber Placement, Placement automatique de fibres) ou ATL (de l'anglais Automated Tape Lay-up, Mise en place automatique de ruban) sont, par exemple, décrits dans les documents WO 2014/076433 A1 et WO 2014/191667. Différentes bandes de matériau selon l'invention peuvent être déposées les unes à côtés des autres selon des trajectoires de dépose parallèles ou non, en fonction de la préforme à réaliser, de manière à former une succession de plis déposés les uns sur les autres. De manière concomitante avec la dépose, la matière thermoplastique de la couche poreuse est activée, c'est-à-dire ramollie, de manière à utiliser le caractère collant à chaud de la matière. Lorsqu'un pli est entièrement déposé, l'orientation est modifiée, afin de déposer le pli suivant selon une trajectoire de dépose différente au pli précédent. Chaque bande est déposée parallèlement ou non (selon la géométrie de la pièce à réaliser) à la bande précédente, avec ou sans espace inter-bande et avec un collage sur l'intégralité de la surface. Ce procédé de dépose est, plus particulièrement, adapté à des largeurs de matériau de renfort comprises entre 3 et 300 mm, avec, de préférence, de faible variation en largeur (< 0,25mm). Dans le cas où le matériau de renfort présente une largeur plus large, il pourra être déposé par tout autre moyen adapté.

En général, la fabrication d'une pièce composite à partir d'au moins un matériau de renfort comprenant au moins un renfort fibreux associé sur au moins une de ses faces à une couche poreuse thermoplastique et d'une résine correspondant à une résine thermodurcissable du type époxy comprend les étapes successives suivantes :

i) l'injection ou l'infusion, à une température pouvant aller typiquement de 90 à 180°C, de ladite résine, au sein dudit matériau derenfort, placé à l'intérieur du moule ;
ii) la consolidation de l'ensemble matériau de renfort/résine, selon un cycle de traitement thermique ;

iii) le refroidissement de la pièce composite consolidée résultant de l'étape ii).

De manière classique, en amont de l'étape i), le procédé de fabrication d'une pièce composite selon l'invention comprend une étape d'agencement à l'intérieur d'un moule d'au moins un matériau de renfort comprenant au moins un renfort fibreux associé sur au moins une de ses faces à une couche poreuse thermoplastique conforme à l'invention.

Ainsi, la fabrication de la pièce composite met en œuvre, une étape de diffusion, par infusion ou injection, d'une résine thermodurcissable, thermoplastique ou d'un mélange de résines thermodurcissable et thermoplastique au sein du matériau de renfort ou d'un empilement de matériaux de renfort selon l'invention, suivie d'une étape de consolidation de la pièce souhaitée par une étape de polymérisation/réticulation suivant un cycle défini en température et éventuellement sous pression, et d'une étape de refroidissement. Selon un mode de réalisation particulier, adapté par ailleurs à toutes les variantes de mise en œuvre décrites en relation avec l'invention, les étapes de diffusion ou d'injection, consolidation et refroidissement sont mises en œuvre dans un moule ouvert ou fermé.

Comme dit précédemment, dans le cadre de l'invention, et ce de manière tout particulièrement préférée, la résine injectée ou infusée est une résine époxy.

Concernant l'étape i), la température mentionnée est celle présente à l'intérieure du moule, lors de l'injection ou de la diffusion de la résine au sein du matériau de renfort.

L'injection ou l'infusion de la résine est le plus souvent réalisée, alors que le matériau de renfort, l'empilement ou la préforme, au sein duquel la résine est injectée ou infusée, est à une température de 110 à 180°C. Cette étape d'injection ou d'infusion dure le plus souvent entre 2 minutes et 5 heures et est fonction de la taille de la pièce composite à réaliser.

L'invention, utilisera, de préférence, pour la réalisation de la pièce composite, une infusion de la résine sous pression réduite, notamment sous une pression inférieure à la pression atmosphérique, notamment inférieure à 1 bar et, de préférence, comprise entre 0,1 et 1 bar. L'infusion sera, de préférence, réalisée dans un moule ouvert (notamment équipé d'une bâche à vide), par exemple par infusion sous bâche à vide. Lors de l'étape de traitement thermique, une pression inférieure à la pression atmosphérique, notamment inférieure à 1 bar et, de préférence, comprise entre 0,1 et 1 bar, pourra également être appliquée.

Dans d'autres procédés selon l'invention, la résine est ajoutée par injection et le matériau de renfort selon l'invention, l'empilement de tels matériaux ou la préforme placé dans un moule destiné à être fermé (nommé moule fermé de manière classique), notamment une fois que la résine a été injectée en quantité suffisante pour remplir le moule. Dans de tels cas où la résine est injectée, l'étape de traitement thermique est réalisée sous pression et ce, de manière classique, notamment à une pression de 1 à 150 bars, et préférentiellement de 1 à 10 bars. C'est le cas des procédés RTM, C-RTM et HP-RTM, bien connus de l'homme du métier.

La pièce composite est obtenue ensuite après une étape de consolidation correspondant à un traitement thermique. L'étape ii) est une étape de traitement thermique de l'ensemble résine/matériau(x) de renfort, conduisant à la réticulation de la résine thermodurcissable et à la consolidation de la pièce composite. Cette étape comprend un chauffage à une température Ta, qui est classiquement appelée température de cuisson de la pièce composite. Cette température Ta peut être égale à celle de l'étape i) ou supérieure. Dans un tel cas où elle est supérieure à la température d'infusion ou d'injection de la résine, l'étape ii) comprend une phase de montée en température, jusqu'à la température Ta.

La pièce composite est obtenue généralement par une étape de consolidation classique par chauffage, en effectuant un cycle de traitement thermique, recommandé par le fournisseur de la résine utilisé, et selon une pratique connue de l'homme du métier. Cette étape de consolidation de la pièce souhaitée fait intervenir une polymérisation (dans le cas d'une résine thermoplastique) ou une réticulation (dans le cas d'une résine thermodurcissable). Dans le cas d'une résine thermodurcissable, une gélification de la résine intervient avant son durcissement/sa réticulation. La pression appliquée lors du cycle de traitement est faible dans le cas de l'infusion sous pression atmosphérique ou sous pression réduite (et notamment de 0,1 mbar à 1 bar) et plus forte dans le cas de l'injection dans un moule RTM (et notamment de 1 à 150 bar). En général, l'addition de résine époxy se fait sous une pression de 0,1 mbar à 15 bar, et plus classiquement de 1 à 10 bar.

Le plus souvent, lors de l'étape de traitement thermique, également nommée étape de consolidation, le cycle de traitement thermique comprend deux phases : une phase de montée en température jusqu'à une température Ta et une étape de chauffage à ladite température Ta, généralement nommée étape de cuisson ou de post-cuisson. La température Ta est une température à laquelle la résine thermodurcissable est réticulable. La température Ta et le temps de chauffage à cette température sont sélectionnés pour obtenir une réticulation complète de la résine thermodurcissable époxy sélectionnée. La température Ta est, notamment, fonction de la résine injectée ou infusée. En général, la température Ta appartient à la gamme allant de 120 à 220°C, de préférence appartient à la gamme allant de 160 à 220°C, préférentiellement à la gamme allant 170 à 190°C, et est typiquement égale à 180°C, notamment pour les résines époxy utilisées pour la réalisation de pièces composites destinées au domaine de l'aéronautique. Le temps de chauffage à de telles températures est, le plus souvent, de 30 minutes à 5 heures, typiquement de 1 heure à 2 heures. Le temps de chauffage sera adapté, par l'homme du métier, à la température Ta. Plus la température Ta est basse, plus le temps de chauffage pourra être long pour obtenir une réticulation complète de la résine.

**EP 4 419 315 B1**

De manière classique la montée en température est réalisée en augmentant cette dernière de 0,1 à 10°C par minutes, et en particulier de 1 à 3°C par minute, typiquement de 2°C par minute.

Selon une première variante de mise en œuvre, l'étape de traitement thermique comprend une phase de montée en température, en particulier à une vitesse de 0,1 à 10° C/minute, jusqu'à une température Ta, qui est supérieure à la température de fusion dudit polymère thermoplastique réactif de ladite au moins une couche poreuse thermoplastique présente dans le matériau de renfort selon l'invention et un chauffage à ladite température Ta, notamment durant 5 minutes à 2 heures. La viscosité de la résine thermodurcissable (ou plus rigoureusement le système résine thermodurcissable modifiée suite à la réaction avec la couche poreuse thermoplastique) augmente entre la fusion dudit polymère thermoplastique réactif de la ou des couche(s) poreuse(s) thermoplastique(s) et l'initiation de la réticulation de la résine thermodurcissable époxy. Cette augmentation de viscosité matérialise les réactions qui interviennent entre la résine époxy et les fonctions réactives -NH2 et/ou -COOH du polymère thermoplastique réactif de la couche poreuse thermoplastique du matériau de renfort.

La réaction ente la résine époxy et les fonctions réactives -NH2 et/ou -COOH du polymère thermoplastique réactif de la couche poreuse thermoplastique du matériau de renfort peut également avoir pour effet que lors de l'étape de traitement thermique, la gélification de la résine thermodurcissable époxy intervient plus tôt que si cette dernière était soumise seule à l'étape de traitement thermique.

Selon des modes de réalisation particuliers, la gélification de la résine thermodurcissable intervient lors du chauffage à la température Ta, après une durée de chauffage de 5 minutes à 60 minutes à la température Ta. Le moment de la gélification de la résine époxy va notamment être fonction de la réactivité de la résine époxy, de la température d'injection/infusion de la résine époxy, de la vitesse de montée en température Ta et de la température Ta sélectionnée.

Selon la première variante du procédé de fabrication d'une pièce composite selon l'invention où la température Ta est supérieure à la température de fusion dudit polymère thermoplastique réactif de ladite au moins une couche poreuse thermoplastique, la résine thermodurcissable époxy présente, de préférence, une température de transition vitreuse Tg supérieure à 150° C.

Selon une deuxième variante de mise en œuvre, l'étape de traitement thermique comprend une phase de montée en température, en particulier à une vitesse de 0,1 à 10° C/minute jusqu'à une température Ta, jusqu'à une température Ta, qui est inférieure à la température de fusion dudit polymère thermoplastique réactif de ladite au moins une couche poreuse thermoplastique, et un chauffage à ladite température Ta, notamment durant 5 minutes à 5 heures. Dans ce cas où le chauffage pour obtenir la réticulation/polymérisation complète de la résine époxy est réalisée à une température Ta plus faible, le temps de chauffage à cette température pourra être plus long. Il sera notamment ajusté par l'homme du métier en fonction de la résine utilisée. Là encore, la réaction ente la résine époxy et les fonctions réactives -NH2 et/ou -COOH du polymère thermoplastique réactif de la couche poreuse thermoplastique du matériau de renfort peut également avoir pour effet que lors de l'étape de traitement thermique, la gélification de la résine thermodurcissable époxy intervient plus tôt que si cette dernière était soumise seule à l'étape de traitement thermique.

Selon la deuxième variante du procédé de fabrication d'une pièce composite selon l'invention où la température Ta est inférieure à la température de fusion dudit polymère thermoplastique réactif de ladite au moins une couche poreuse thermoplastique, la résine thermodurcissable époxy présente, de préférence, une température de transition vitreuse Tg au moins égale à 100°C, et avantageusement dans la gamme allant de 100 à 150°C

De manière avantageuse également, selon la deuxième variante du procédé de fabrication d'une pièce composite selon l'invention où la température Ta est inférieure à la température de fusion dudit polymère thermoplastique réactif de ladite au moins une couche poreuse thermoplastique, ledit polymère thermoplastique réactif a une température de fusion supérieure à 120°C.

Dans le cadre de l'invention, et ce quelle que soit la variante de mise en œuvre du procédé, lors de l'étape de traitement thermique, la gélification de la résine thermodurcissable se produit après que des fonctions réactives du polymère thermoplastique réactif de la couche poreuse thermoplastique du matériau de renfort aient réagi avec la résine thermodurcissable époxy. Par contre, d'autres réactions peuvent encore se produire lors de la réticulation complète de la résine.

Une fois le traitement thermique terminé, le refroidissement est effectué par circulation d'un fluide jouant le rôle de réfrigérant, notamment de l'eau ou un mélange d'eau et d'air, en interrompant le chauffage. La mise sous pression est, le plus souvent interrompue au cours du refroidissement, notamment lorsqu'une température inférieure à 40°C est atteinte.

Bien entendu, les mêmes caractéristiques et mises en œuvre décrites en lien avec le matériau de renfort selon l'invention, s'appliquent aux procédés et utilisations décrites dans le cadre de l'invention.

Le polymère thermoplastique réactif utilisé dans le cadre de l'invention est porteur d'une quantité suffisante de fonctions réactives -NH2 et/ou -COOH qui vont lui permettre de réagir avec des résines du type époxy qui sont classiquement utilisées, lors de la réalisation de pièces composites. Comme cela va ressortir des exemples, une telle réaction va permettre de conférer des caractéristiques particulièrement avantageuses aux pièces composites obtenues, notamment d'améliorer les propriétés de résistance en température et en humidité, tout en conservant des propriétés

17

mécaniques satisfaisantes d'importance pour les pièces composites destinées à l'industrie aéronautique et aérospatiale.

**Autres aspects at autres inventions**

La présente invention peut être généralisée à d'autres résines thermodurcissables, que celles de la famille des epoxy.

D'autres résines thermodurcissables utilisables sont, en particulier, choisies parmi les polyesters insaturés, les vinylesters, les résines phénoliques, les polyimides, les bismaléimides, les résines phénol-formaldéhydes, urée-formaldéhydes, les 1,3,5-triazine-2,4,6-triamines, les benzoxazines, les esters de cyanates, et leurs mélanges. Une telle résine pourra également comprendre un ou plusieurs agents durcisseurs, bien connus de l'homme du métier pour être utilisés avec les polymères thermodurcissables sélectionnés.

Les fonctions réactives présentes sur le polymère réactif seront, alors, adaptées par l'homme du métier pour pouvoir réagir avec la résine thermodurcissable injectée ou infusée. En particulier, dans le cas des résines polyesters insaturés ou vinylesters, ainsi que des bismaléimides, le polymère thermoplastique réactif peut contenir des insaturations lui permettant de réagir avec ces résines.

Dans le cas des résines phénoliques, le polymère thermoplastique réactif peut, par exemple, contenir des fonctions alcools, aldéhydes ou cétones lui permettant de réagir avec ce type de résine.

Les descriptions précédentes données en lien avec l'utilisation de résine époxy sont transposables à ces types de procédés.

Ainsi, la présente description concerne également les aspects suivants.

La description concerne un procédé de fabrication d'une pièce composite comprenant les étapes successives suivantes :

0) une étape d'agencement à l'intérieur d'un moule d'au moins un matériau de renfort comprenant au moins un renfort fibreux associé sur au moins une de ses faces à une couche poreuse thermoplastique ;
i) une étape d'injection ou d'infusion d'une résine thermodurcissable, à une température pouvant aller notamment de 90 à 180°C,au sein dudit matériau de renfort placé à l'intérieur du moule ;
ii) une étape de traitement thermique de l'ensemble résine/matériau(x) de renfort, comprenant un chauffage à une température Ta, conduisant à la réticulation de la résine thermodurcissable et à la consolidation de la pièce composite;
iii) le refroidissement de la pièce composite consolidée résultant de l'étape ii); caractérisé en ce que ladite couche poreuse thermoplastique est porteuse de fonctions réactives qui réagissent avec la résine thermodurcissable lors de l'étape de traitement thermique.

En particulier, dans un tel procédé, la ou lesdite(s) couche(s) poreuse(s) thermoplastique(s) dudit matériau de renfort représentent au plus 10% de la masse totale du matériau de renfort, de préférence de 0,5 à 10% de la masse totale du matériau de renfort, et préférentiellement de 2 à 6% de la masse totale du matériau de renfort.

Dans le cadre d'un tel procédé, du fait de la couche poreuse présente dans le matériau de renfort qui réagit avec la résine thermodurcissable, cette dernière va n'être que partiellement fusible, voire totalement infusible, dans les résines thermodurcissables, notamment du type époxy qui sont couramment utilisées, lors de la réalisation de pièce composite. Dans le cadre du procédé selon l'invention, la couche poreuse thermoplastique est porteuse de fonctions réactives qui réagissent avec la résine thermodurcissable lors de l'étape de traitement thermique, ce qui permet de réduire la sensibilité à l'exposition en température, ainsi que d'améliorer les propriétés en température pour les matériaux de l'industrie aérospatiale.

Selon une première variante d'un tel procédé de fabrication d'une pièce composite, ladite température Ta est supérieure à la température de fusion dudit polymère thermoplastique réactif de ladite au moins une couche poreuse thermoplastique. En particulier, un chauffage à ladite température Ta est mené lors de l'étape ii) durant 5 minutes à 2 heures. Le plus souvent, l'étape de traitement thermique comprend une phase de montée en température, en particulier à une vitesse de 0,1 à 10°C/minute, jusqu'à ladite température Ta.

Il est possible que la viscosité de la résine thermodurcissable augmente entre la fusion dudit polymère thermoplastique réactif de la couche poreuse thermoplastique et l'initiation de la réticulation de la résine thermodurcissable. C'est en particulier, la viscosité du système résine thermodurcissable modifiée suite à la fusion et la réaction avec la couche poreuse thermoplastique qui augmente.

Il est également possible que, lors de l'étape de traitement thermique, la gélification de la résine thermodurcissable intervienne plus tôt que si cette dernière était soumise seule à l'étape de traitement thermique.

La gélification de la résine thermodurcissable peut intervenir lors du chauffage à la température Ta, notamment après une durée de chauffage de 5 minutes à 60 minutes à la température Ta.

Selon la première variante d'un tel procédé de fabrication d'une pièce composite où la température Ta est supérieure à la température de fusion dudit polymère thermoplastique réactif de ladite au moins une couche poreuse thermoplastique, la résine thermodurcissable présente, de préférence, une température de transition vitreuse Tg supérieure à 150°C.

Selon une deuxième variante d'un tel procédé de fabrication d'une pièce composite, la température Ta est inférieure à la température de fusion dudit polymère thermoplastique réactif de ladite couche poreuse thermoplastique. En particulier, un chauffage à ladite température Ta, pendant 5 minutes à 5 heures, est mené lors de l'étape ii). De préférence, la gélification de la résine thermodurcissable intervient plus tôt que si cette dernière était soumise seule à l'étape de traitement thermique. Là encore, généralement, l'étape de traitement thermique comprend une phase de montée en température, en particulier à une vitesse de 0,1 à 10° C/minute, jusqu'à ladite température Ta.

Selon la deuxième variante d'un tel procédé de fabrication d'une pièce composite, où la température Ta est inférieure à la température de fusion dudit polymère thermoplastique réactif de ladite au moins une couche poreuse thermoplastique, la résine thermodurcissable présente, de préférence, une température de transition vitreuse Tg au moins égale à 100°C, et avantageusement dans la gamme allant de 100 à 150°C

De manière avantageuse également, selon la deuxième variante d'un tel procédé de fabrication d'une pièce composite où la température Ta est inférieure à la température de fusion dudit polymère thermoplastique réactif de ladite au moins une couche poreuse thermoplastique, ledit polymère thermoplastique réactif a une température de fusion supérieure à 120° C.

Dans de tels procédés de fabrication d'une pièce composite, quelle que soit leur variante de mise en œuvre, la température Ta appartient, en général, à la gamme allant de 120 à 220°C, de préférence appartient à la gamme allant de 160 à 220°C, préférentiellement à la gamme allant de 170 à 190°C, et est typiquement égale à 180°C.

Dans lesdits procédés de fabrication d'une pièce composite, quelle que soit leur variante de mise en œuvre, lors de l'étape de traitement thermique, de manière avantageuse, la gélification de la résine thermodurcissable se produit après que des fonctions réactives aient réagi avec ladite résine thermodurcissable.

Par ailleurs, la réaction du polymère thermoplastique de la couche poreuse avec la résine injectée ou infusée, va permettre d'utiliser une couche poreuse présentant une température de fusion basse, et ainsi permettre l'utilisation d'une température faible lors de la fabrication et, également, lors de la mise en forme du matériau de renfort, et donc un gain en termes de coût et de temps. Ainsi, un autre avantage est que la température de fusion dudit polymère thermoplastique réactif de la couche poreuse thermoplastique, va pouvoir être inférieure à 170°C, voire à 150°C, permettant ainsi de réaliser toutesles étapes du procédé de fabrication, préalables à l'ajout de la résine nécessaire au final pour la réalisation de la pièce (de la préparation du matériau sec, en passant par sa dépose et son préformage), à une température inférieure à 170°C,et encore mieux inférieure à 150°C voire moins. Ainsi, de telles couches poreuses comprenant un polymère thermoplastique réactif à plus faible point de fusion vont permettre la fabrication du matériau de renfort associant couche(s) poreuse(s) et renfort(s) fibreux à une température compatible avec des procédés de fabrication automatisée, notamment de placement de fibres et de formage à chaud de préformes déposées à plat.

De tels procédés ont donc pour objectif secondaire de combiner les effets bénéfiques de l'utilisation d'une couche poreuse thermoplastique sur les performances de résistance à l'impact, tout en ayant la possibilité de réaliser l'ensemble des étapes du procédé de fabrication préalables à l'infusion ou à l'injection de la résine, à des températures inférieures à 150°C, voire à 140°C, ces températures pouvant même être dans certains cas dans la gamme allant de 80 à 130°C ou 100 à 130°C.

Ainsi, de manière avantageuse, dans lesdits procédé de fabrication d'une pièce composite, ledit polymère thermoplastique réactif de ladite au moins une couche poreuse thermoplastique présente au sein du matériau de renfort a une température de fusion inférieure à 170°C, voire à 150°C et préférentiellement appartenant à la gamme allant de 100 à 140 °C, et de préférence à la gamme allant de 100 à 130°C.

Lesdits procédés de fabrication d'une pièce composite, peuvent comprendre, préalablement à l'infusion ou à l'injection de ladite résine thermodurcissable, un dépôt ou une mise en forme du(des)dit(s) matériau(x) de renfort, qui utilise le caractère collant à chaud de ladite au moins une couche poreuse thermoplastique présente dans le(s)dit(s) matériau(x) de renfort et met en œuvre un chauffage réalisé à une température inférieure à 170°C, voire à 150°C et préférentiellement appartenant à la gamme allant de 80 à 140°C, notamment de 100 à 140 °C, et de préférence à la gamme allant de80 à 130°C, notamment de 100 à 130°C, choisie en fonction de la températurede fusion dudit polymère thermoplastique réactif de ladite couche poreuse thermoplastique.

Lesdits procédés de fabrication d'une pièce composite, sont particulièrement adaptés aux cas où ladite résine injectée ou infusée est une résine époxy.

De manière avantageuse, ladite résine époxy a une viscosité inférieure à 1000 mPa.s à une température de 90°C.

A titre de résines époxy particulièrement préférées, on peut citer les résines époxy qui comprennent un époxy tétrafonctionnel, éventuellement en mélange avec un époxy trifonctionnel, un ou plusieurs agents durcisseurs et un ou plusieurs modifiant(s) choc.

En particulier, dans lesdits procédés de fabrication d'une pièce composite, la couche poreuse thermoplastique comprend un polymère thermoplastique dit réactif ou est constituée d'un ou plusieurs polymères thermoplastiques réactifs, un polymère thermoplastique réactif étant porteur de fonctions $-NH_2$ en quantité supérieure à 0,15 meq/g de polymère thermoplastique réactif et/ou porteur de fonctions -COOH en quantité supérieure à 0,20 meq/g de polymère thermoplastique réactif. De telles couches poreuses thermoplastiques sont particulièrement adaptées au cas où la résine injectée ou infusée est une résine époxy, notamment une des résines précédemment décrites.

De manière avantageuse, ledit polymère thermoplastique réactif est porteur de fonctions $-NH_2$ en quantité supérieure à 0,20 meq/g de polymère thermoplastique réactif, de préférence dans la gamme allant de 0,20 à 1 meq/g de polymère thermoplastique réactif et préférentiellement dans la gamme allant de 0,20 à 0,95 meq/g de polymère thermoplastique réactif, et/ou est porteur de fonctions -COOH en quantité supérieure à 0,20 meq/g de polymère thermoplastique réactif, de préférence dans la gamme allant de 0,20 à 1 meq/g de polymère thermoplastique réactif et préférentiellement dans la gamme allant de 0,20 à 0,95 meq/g de polymère thermoplastique réactif.

En particulier, le polymère thermoplastique réactif est un polyamide ou un copolyamide porteur desdites fonctions.

En particulier, dans lesdits procédés de fabrication d'une pièce composite, ladite au moins une couche poreuse comporte des fonctions $-NH_2$ en quantité supérieure à 0,15 meq/g de couche poreuse et/ou des fonctions -COOH en quantité supérieure à 0,20 meq/g de couche poreuse. Là encore, de telles couches poreuses thermoplastiques sont particulièrement adaptées au cas où la résine injectée ou infusée est une résine époxy, notamment une des résines précédemment décrites.

Selon des modes de réalisations particuliers, le polymère thermoplastique réactif possède une masse moléculaire moyenne en nombre Mn supérieure à 4000 g/mol.

Selon des modes de réalisations particuliers, l'étape i) est réalisée par injection de la résine et le traitement thermique de l'étape iii) est mené sous une pression de 1 à 150 bar dans un moule fermé.

Selon d'autres modes de réalisations particuliers, l'étape d'agencement 0) est réalisée dans un moule ouvert, notamment équipé d'une bâche à vide, et l'étape i) est réalisée sous pression réduite, notamment sous une pression comprise entre 0,1 et 1 bar.

Dans les matériaux de renfort utilisés dans de tels procédés, le renfort fibreux peut prendre différentes formes. Selon certaines variantes de réalisation, le renfort fibreux est une nappe unidirectionnelle de fils de renfort, un tissu de fils de renfort ou un empilement de nappes unidirectionnelles de fils de renfort liées entre elles par couture ou tout autre moyen physique, notamment du type aiguilletage.

Le renfort fibreux peut, en particulier, être constitué de fibres de verre, de fibres d'aramide, ou, de préférence, de fibres de carbone.

Selon certains modes de réalisation de tels procédés, un matériau de renfort utilisé est constitué d'une nappe unidirectionnelle de fils de renfort correspondant au renfort fibreux, associée sur au moins une de ses faces à une couche poreuse thermoplastique telle que définie dans le cadre de l'invention, de préférence ledit matériau de renfort étant constitué d'une nappe unidirectionnelle de fils de renfort correspondant au renfort fibreux, associée sur chacune de ses faces à une couche poreuse thermoplastique telle que définie dans le cadre de l'invention et les couches poreuses thermoplastiques présentes sur chacune des faces de la nappe unidirectionnelle de fils de renfort étant identiques.

Selon certains modes de réalisation, un matériau de renfort utilisé dans lesdits procédés est constitué d'un empilement de nappes unidirectionnelles de fils de renfort, en tant que renforts fibreux, orientées selon des directions différentes, avec au moins une couche poreuse thermoplastique telle que définie dans le cadre de l'invention, intercalée entre deux nappes unidirectionnelles de fils de renfort et/ou en surface de l'empilement. Un tel empilement peut être constitué d'une superposition de couches correspondant à un enchainement $(CP/R)_n(CP)_m$ ou $(CP/R/CP)_n$ avec CP qui désigne une couche poreuse thermoplastique telle que définie dans le cadre de l'invention, R une nappe unidirectionnelle, n un nombre entier supérieur ou égal à 1 et m qui est égal à 0 ou à 1. Dans de tels empilements, l'association des nappes unidirectionnelles de fils de renfort entre elles, voire leur association avec l'au moins une couche poreuse thermoplastique, peut être réalisée par couture, tricotage ou aiguilletage.

Dans les matériaux de renfort utilisés dans lesdits procédés, la ou lesdite(s) couche(s) poreuse(s) thermoplastique(s) présente(s) est(sont), notamment, un film poreux, une grille, un dépôt de poudre, un tissu ou, de préférence, un non-tissé ou voile.

Un autre aspect de la description a également pour objet les pièces composites obtenues par un procédé de fabrication tel que défini dans la présente partie.

La présente description concerne donc des pièces composites qui comprennent une matrice thermodurcissable, et en particulier époxy, thermodurcie dans laquelle est inclus, au moins un matériau de renfort comprenant au moins un renfort fibreux associé sur au moins une de ses faces à une couche poreuse thermoplastique. Dans lesdites pièces composites, il existe des liaisons covalentes entre la matrice époxy thermodurcie et le polymère thermoplastique présent au sein de la ou des couche(s) poreuse(s) thermoplastique(s), lesdites liaisons covalentes résultant de la réaction de fonctions réactives qui étaient présentes sur ledit polymère thermoplastique et de la résine thermodurcissable, et en particulier époxy. En particulier, dans de telles pièces composites, la ou lesdite(s) couche(s) poreuse(s) thermoplastique(s) dudit matériau de renfort représentent au plus 10% de la masse totale du matériau de renfort, de préférence de 0,5 à 10% de la masse totale du matériau de renfort, et préférentiellement de 2 à 6% de la masse totale du matériau de renfort.

Les exemples ci-après, en référence aux Figures annexées, permettent d'illustrer l'invention, mais n'ont aucun caractère limitatif.

**Brève description des Figures**

[Fig. 1] La figure 1 est une vue schématique d'un procédé de fabrication d'un exemple de matériau de renfort selon l'invention.

[Fig. 2] La figure 2 est une vue schématique d'un exemple de matériau de renfort selon l'invention.

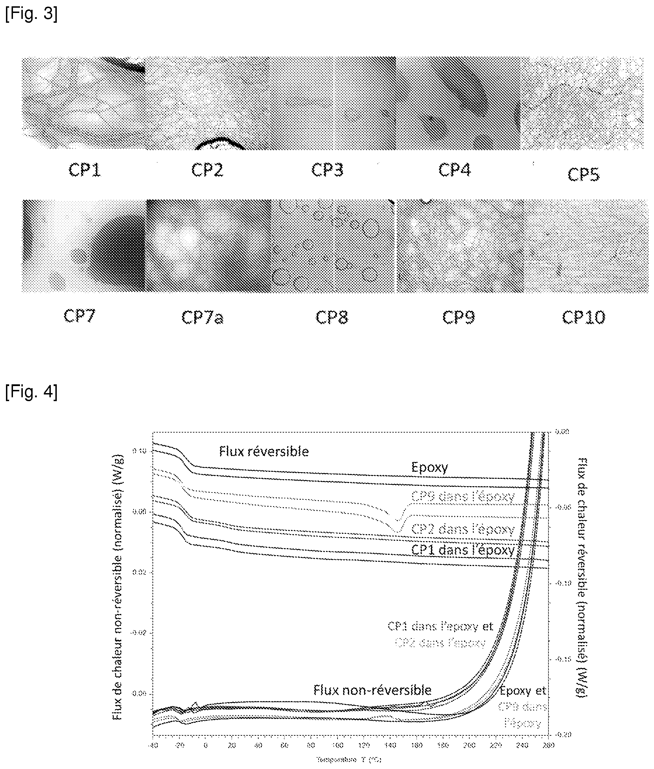

[Fig. 3] La figure 3 présente des images obtenues sous microscopie optique, lorsque différents voiles et de la résine époxy RTM6 sont placés entre deux lames de verre, et soumis à un chauffage de 180°C.

[Fig. 4] La figure 4 représente les flux de chaleur réversible et non réversible suite à une montée en température de 2°C/min, par analyse calorimétrique différentielle modulée, de différents voiles dans une résine époxy tétrafonctionnelle de chez Huntsman, qui ne comprend pas de durcisseur, après un cycle 1h 120°C + 2h 180°C avec une montée en température de 2°C/min.

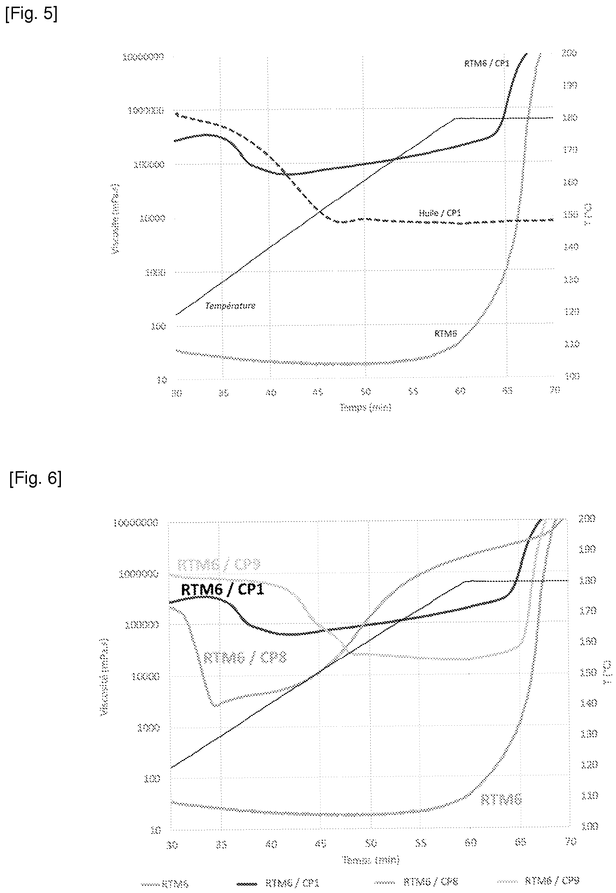

[Fig. 5] La figure 5 présente l'évolution de la viscosité de la résine RTM6 seule au cours de la cuisson, de la résine RTM6 lorsque cette dernière est diffusée au sein d'un empilement de couches poreuses CP1 conformes à l'invention, et du même empilement de couches poreuses CP1 dans une huile.

[Fig. 6] La figure 6 présente l'évolution de la viscosité de la résine RTM6 seule (montée en température puis cuisson), de la résine RTM6 lorsque cette dernière est diffusée au sein d'un empilement de couches poreuses CP1 ou CP8 conformes à l'invention porteuses de fonctions -COOH ou CP9 hors invention.

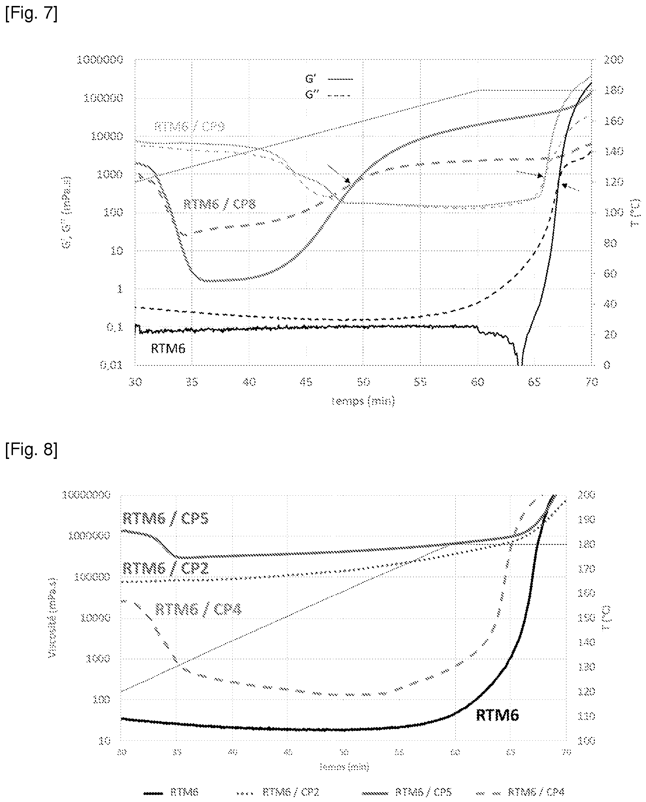

[Fig. 7] La figure 7 présente l'évolution des modules G' et G", en fonction du temps et de la température, au cours de l'étape de traitement thermique (montée en température puis cuisson), de la résine RTM6 lorsque cette dernière est diffusée au sein d'un empilement de couches poreuses CP8 conformes à l'invention ou CP9 hors invention.

[Fig. 8] La figure 8 présente l'évolution de la viscosité de la résine RTM6 seule au cours de l'étape de traitement thermique (montée en température puis cuisson), de la résine RTM6 lorsque cette dernière est diffusée au sein d'un empilement de couches poreuses CP2 ou CP5 conformes à l'invention porteuses de fonctions -NH2 ou CP4 hors invention.

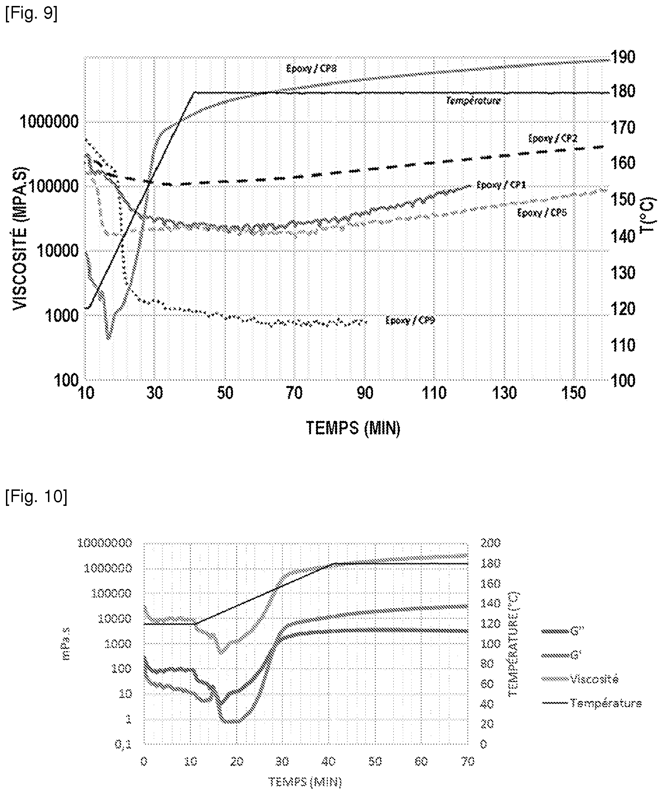

[Fig. 9] La figure 9 présente l'évolution de la viscosité de la résine RTM6 seule au cours de l'étape de traitement thermique (montée en température puis cuisson), d'une résine époxy tétrafonctionnelle de chez Huntsman, qui ne comprend pas de durcisseur, lorsque cette dernière est diffusée au sein d'un empilement de couches poreuses CP1, CP2, CP5 ou CP8 conformes à l'invention, ou CP9 hors invention.

[Fig. 10] La figure 10 présente l'évolution de la viscosité et des modules G' et G", en fonction du temps et de la température, au cours de l'étape de traitement thermique (montée en température puis cuisson), de la résine époxy tétrafonctionnelle de chez Huntsman, qui ne comprend pas de durcisseur lorsque cette dernière est diffusée au sein d'un empilement de couches poreuses CP8 conformes à l'invention.

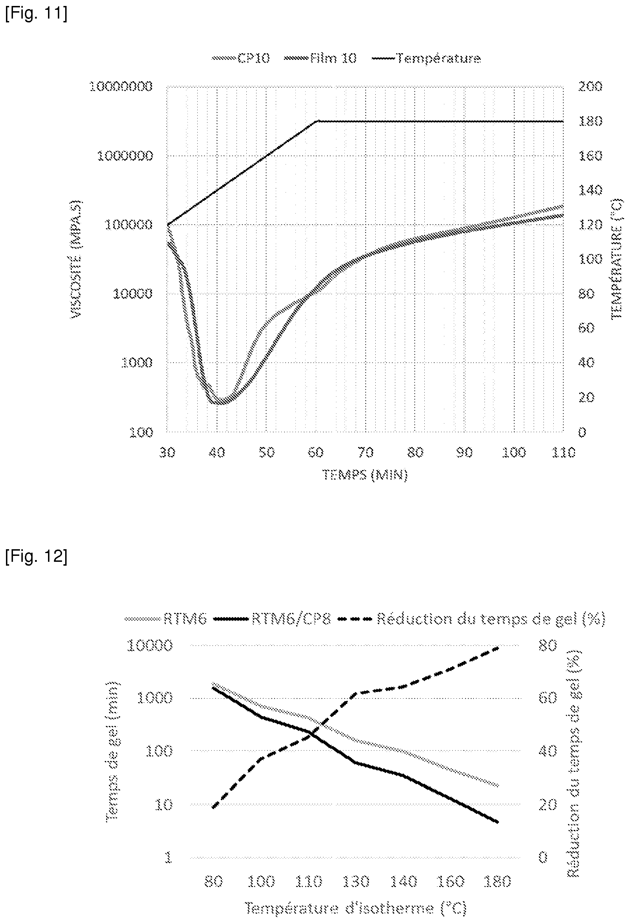

[Fig. 11] La figure 11 présente l'évolution de la viscosité au cours de l'étape de traitement thermique (montée en température puis cuisson), de la résine RTM6 lorsque cette dernière est diffusée au sein d'un empilement de couches poreuses CP10 conformes à l'invention ou de couches de films non poreux constitués du même polymère.

[Fig. 12] La figure 12 montre l'évolution du temps de gel (durée de chauffage à la température Ta jusqu'à l'obtention du point de gel) selon la température d'isotherme Ta (température utilisée pour l'infusion de la résine et la cuisson) de la résine RTM6, lorsque cette dernière est diffusée au sein d'un empilement de couches poreuses CP8 conformes à l'invention.

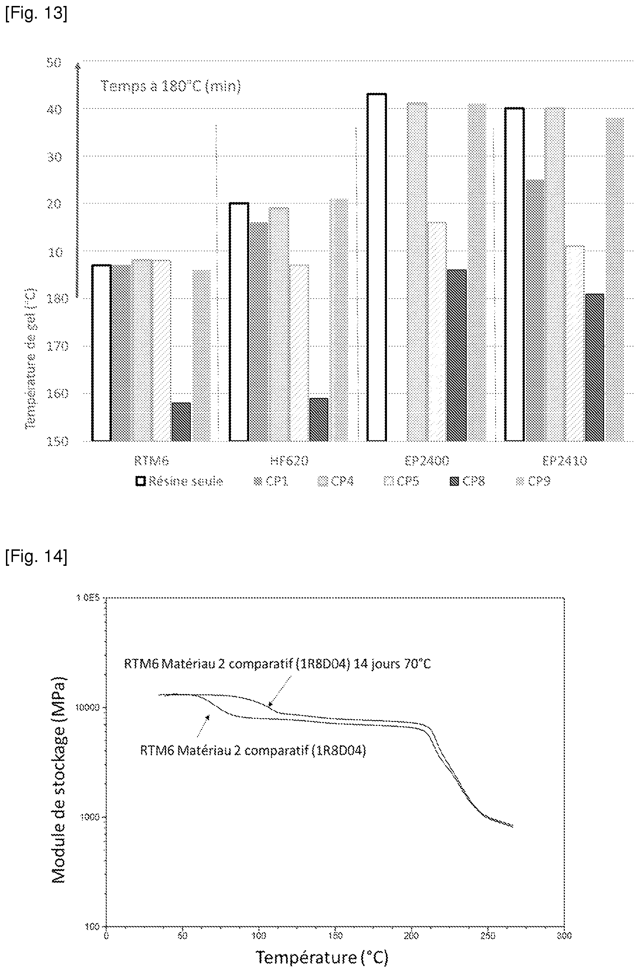

[Fig. 13] La figure 13 présente le temps de chauffage à 180°C nécessaire pour obtenir la gélification de la résine (croisement des modules G' et G") dans le cas de différentes résines époxy diffusées dans un empilement de différentes couches (selon l'invention et hors invention), après une montée en température à 2°C/min de 120°C à 180°C + 2h à 180°C.

[Fig. 14] La figure 14 présente dans le cas du matériau de renfort 2 (hors invention), la courbe DMA obtenue avec et sans conditionnement à 70°C pendant 14 jours, avec une montée en température de 2°C/min de 25 à 270°C, pour une pièce composite obtenue par injection de résine RTM6.

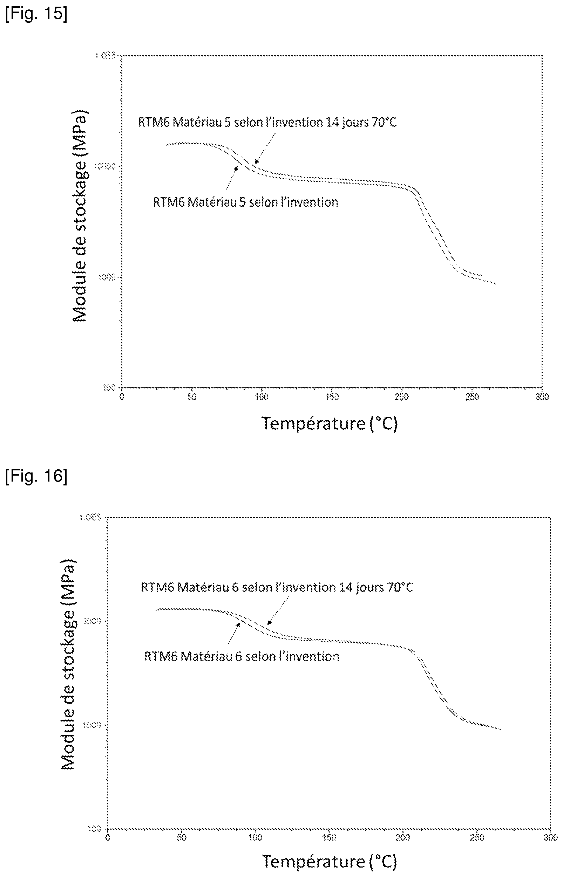

[Fig. 15] La figure 15 présente dans le cas du matériau de renfort 5 (selon l'invention), la courbe DMA obtenue avec et sans conditionnement à 70°C pendant 14 jours, avec une montée en température de 2°C/min de 25 à 270°C, pour une pièce composite obtenue par injection de résine RTM6.

[Fig. 16] La figure 16 présente dans le cas du matériau de renfort 6 (selon l'invention), la courbe DMA obtenue avec et sans conditionnement à 70°C pendant 14 jours, avec une montée en température de 2°C/min de 25 à 270°C, pour une pièce composite obtenue par injection de résine RTM6.

## Exemples

## Renforts, couches poreuses et résines utilisés

Les renforts fibreux utilisés dans tous les cas sont des nappes unidirectionnelles de 210g/m2, réalisées avec des fibres de carbone commercialisées par la société Hexcel Composites, Dagneux France, sous la référence IMA 12K. Les propriétés de ces fibres 12K sont résumées dans le Tableau 1 ci-après :

Tableau 1

|  | Hexcel IMA 12K |
|---|---|
| force de tension (MPa) | 6,067 |
| module de tension (GPa) | 297 |
| élongation finale à la rupture (%) | 1,8 |
| densité (g/cm$^3$) | 1,79 |
| poids/longueur (g/m) | 0,445 |
| diamètre des filaments ($\mu$m) | 5,1 |

Les couches poreuses polymériques étudiées sont présentées dans le Tableau 2 ci-après :

Tableau 2

| Couche polymérique (CP) | Polymère | Nature de la couche | Fonctions COOH (meq/g)* | Fonctions NH2 (meq/g)* | Point de fusion de la couche (°C) | Autres informations |
|---|---|---|---|---|---|---|
| 1 (invention) | copolyamide Arkema | voile (non-tissé) | 0,22 | 0,02 | 146 | |
| 2 (invention) | copolyamide Arkema | voile (non-tissé) | 0,02 | 0,34 | 106 | |
| 3 (hors invention) | Copolyamide Arkema | voile (non-tissé) | 0,11 | 0,08 | 103 | |

(suite)

| Couche polymérique (CP) | Polymère | Nature de la couche | Fonctions COOH (meq/g)* | Fonctions NH2 (meq/g)* | Point de fusion de la couche (°C) | Autres informations |
|---|---|---|---|---|---|---|
| 4 (hors invention) | Copolyamide Arkema | voile (non-tissé) | - | 0,06 | 126 | |
| 5 (invention) | Copolyamide Arkema | voile (non-tissé) | - | 0,34 | 128 | |
| 6 (art antérieur) | époxy (thermodurcissable) | dépôt de poudre | | | | Utilisée dans le tissu Primetex 43098 S 1020 S E01 1F commercialisé par Hexcel |
| 7 (art antérieur) | copolyamide Platamid® HX2632 commercialisé par Arkema | voile (non-tissé) | - | - | 105 | Couche utilisée dans la demande WO 2019/102136, avant réticulation |
| 7a (art antérieur) | copolyamide Platamid® HX2632 commercialisé par Arkema partiellement réticulé | Voile (non-tissé) | - | - | 100 | Couche utilisée dans la demande WO 2019/102136 |
| 8 (invention) | Copolyamide Arkema | voile (non-tissé) | 0,46 | 0,02 | 121 | |
| 9 (art antérieur) | copolyamide | voile (non-tissé) | 0,10 | 0,12 | 160 | Voile 1R8D04 commercialisé par Protechnic utilisé dans WO 2019/102136 à titre de comparatif |
| 10 (invention) | Copolyamide Arkema | voile (non-tissé) | 0,23 | - | 125 | |
| * meq/g de polymère = meq/g de couche poreuse | | | | | | |

Le Tableau 3 donne plus de détails sur certains des polymères utilisés pour constituer les couches poreuses.

Tableau 3

| Couche polymérique (CP) | coPA : Ratio en % masse | | | | | | Matières premières diacides et diamines/triamines apportant les fonctions amine et acide ** | | | Matière première apportant la réticulation ** |
|---|---|---|---|---|---|---|---|---|---|---|
| | 6 | 66 | 6.10 | 6.12 | 11 | 12 | Acide adipique DC6 | Hexamethylene diamine HMDA | Diethylenetriamine DETA (monomère multifonctionnel) | Acide undécylénique (monoacide insaturé) |
| 1 (invention) | 35 | 30 | 35 | - | - | - | 1,3 | - | | |

(suite)

| Couche polymérique (CP) | coPA : Ratio en % masse | | | | | | Matières premières diacides et diamines/triamines apportant les fonctions amine et acide ** | | | Matière première apportant la réticulation ** |
|---|---|---|---|---|---|---|---|---|---|---|
| | 6 | 66 | 6.10 | 6.12 | 11 | 12 | Acide adipique DC6 | Hexamethylene diamine HMDA | Diethylenetriamine DETA (monomère multifonctionnel) | Acide undécylénique (monoacide insaturé) |
| 2 (invention) | 22 | 28 | - | - | - | 50 | - | 1,80 | - | |
| 5 (invention) | 20 | - | - | 30 | - | 50 | - | 1,80 | - | |
| 8 (invention) | 25 | - | - | 25 | - | 50 | 3,6 | - | 0,23 | 1 |
| (**) : (% massique de la formulation utilisée pour la formation du coPA) | | | | | | | | | | |

Les couches poreuses utilisées à titre de comparaison ont été réalisées avec :

1) CP9 : un voile thermoplastique 1R8004 commercialisé par la société Protechnic (66, rue des Fabriques, 68702 - CERNAY Cedex - France) qui présente une température de fusion de 160°C - ce v$\alpha$le (nommé par la suite voile 1 R8D04) est obtenu par fusion-soufflage (« meltblown » en anglais) et a une masse surfacique de 4 g/m2 et une épaisseur de 100 $\mu$m avant contre-collage sur le renfort fibreux. Le diamètre des fibres qui le constituent est de 15 $\mu$m. Le facteur d'ouverture d'une telle couche est de 50 % environ.

2) CP7 : un voile de fibres en un polymère Platamid® HX2632 commercialisé par la société Arkema (copolyamide présentant des insaturations terminales permettant d'obtenir un réseau tridimensionnel sous traitement UV, gamma ou beta) qui présente une température de fusion de 117°C - ce voile (nommé par la suite voile HX2632) est obtenu par fusion-soufflage (« meltblown » en anglais) et a une masse surfacique de 4 g/m2 et une épaisseur de 100 $\mu$m avant contre-collage sur le renfort fibreux. Le diamètre des fibres qui le constituent est de 15 $\mu$m. Le facteur d'ouverture d'une telle couche est de 50 % environ. CP7a : un voile de fibres en un polymère Platamid® HX2632 commercialisé par la société Arkema réticulé sous traitement beta (100 kGy, comme décrit dans la demande WO 2019/102136), qui présente une température de fusion de 109°C. Ce voile est obtenu par fusion-soufflage (« meltblown » en anglais), a une masse surfacique de 4 g/m$^2$, une épaisseur de 100 $\mu$m avant contre-collage sur le renfort fibreux et est partiellement réticulé sous traitement beta. Le diamètre des fibres qui le constituent est de 15 $\mu$m. Le facteur d'ouverture d'une telle couche est de 50% environ.

3) CP6 : par dépôt d'une couche de poudre époxy utilisée dans le tissu Primetex 43098 S 1020 S E01 1F, commercialisé par la société Hexcel Composites, Dagneux France. Le diamètre moyen de la poudre est de 51 $\mu$m (D50, valeur médiane), sa transition vitreuse se situe dans la gamme allant de 54 à 65°C.

4) CP3 : un voile de fibres en un polymère Platamid® commercialisé par la société Arkema, qui présente une température de fusion de 103°C - ce voile est obtenu par fusion-soufflage (« meltblown » en anglais) et a une masse surfacique de 4 g/m2 et une épaisseur de 100 $\mu$m avant contre-collage sur le renfort fibreux. Le diamètre des fibres qui le constituent est de 15 $\mu$m. Le facteur d'ouverture d'une telle couche est de 50 % environ.

5) CP4 : un voile de fibres en un polymère Platamid® commercialisé par la société Arkema, qui présente une température de fusion de 126°C - ce voile est obtenu par fusion-soufflage (« meltblown » en anglais) et a une masse surfacique de 4 g/m2 et une épaisseur de 100 $\mu$m avant contre-collage sur le renfort fibreux. Le diamètre des fibres qui le constituent est de 15 $\mu$m. Le facteur d'ouverture d'une telle couche est de 50 % environ.

Les couches poreuses selon l'invention ont été réalisées avec :

1) CP1 : un voile de fibres en un polymère Platamid® commercialisé par la société Arkema, qui présente une température de fusion de 146°C - ce voile est obtenu par fusion-soufflage (« meltblown » en anglais) et a une masse surfacique de 4 g/m2 et une épaisseur de 100 $\mu$m avant contre-collage sur le renfort fibreux. Le diamètre des fibres qui le constituent est de 15 $\mu$m. Le facteur d'ouverture d'une telle couche est de 50 % environ.

2) CP2 : un voile de fibres en un polymère Platamid® commercialisé par la société Arkema, qui présente une température de fusion de 106°C - ce voile est obtenu par fusion-soufflage (« meltblown » en anglais) et a une masse surfacique de 4 g/m2 et une épaisseur de 100 μm avant contre-collage sur le renfort fibreux. Le diamètre des fibres qui le constituent est de 15 μm. Le facteur d'ouverture d'une telle couche est de 50 % environ.

3) CP5 : un voile d'un copolyamide réalisé par la société Arkema, qui présente une température de fusion de 128°C - ce voile est obtenu par fusion-soufflage (« meltblown » en anglais) et a une masse surfacique de 4 g/m2 et une épaisseur de 100 μm avant contre-collage sur le renfort fibreux. Le diamètre des fibres qui le constituent est de 15 μm. Le facteur d'ouverture d'une telle couche est de 50 % environ.

4) CP8 : un voile d'un copolyamide réalisé par la société Arkema, qui présente une température de fusion de 121 °C - ce voile est obtenu par fusion-soufflage (« meltblown » en anglais) et a une masse surfacique de 4 g/m2 et une épaisseur de 100 μm avant contre-collage sur le renfort fibreux. Le diamètre des fibres qui le constituent est de 15 μm. Le facteur d'ouverture d'une telle couche est de 50 % environ.

5) CP10 : un voile d'un copolyamide réalisé par la société Arkema, qui présente une température de fusion de 125°C - ce voile est obtenu par fusion-soufflage (« meltblown » en anglais) et a une masse surfacique de 4 g/m2 et une épaisseur de 100 μm avant contre-collage sur le renfort fibreux. Le diamètre des fibres qui le constituent est de 15 μm. Le facteur d'ouverture d'une telle couche est de 50 % environ.

Les résines thermodurcissables utilisées pour la réalisation de pièces composites sont présentées dans le Tableau 4 ci-après :

Tableau 4

| Résine Type Référence commerciale | Fournisseur | Principales caractéristiques Température et temps de cuisson* |
|---|---|---|
| époxy tétrafonctionnelle HexFlow® RTM6 | Hexcel composites | 180°C, 90 minutes minimum |
| époxy tétrafonctionnelle HexFlow® HF620 | Hexcel composites | 180°C, 2 heures |
| époxy trifonctionnelle Prism® EP2400 | Solvay | 180°C, 2 heures |
| époxy trifonctionnelle Prism® EP2410 | Solvay | 180°C, 2 heures |
| *Préconisés sur la fiche produit | | |

Méthodes de détermination de la quantité de fonctions -NH2 et -COOH :
La quantité de fonctions réactives -COOH ou -NH2 présentes peut être évaluée par titrage potentiométrique : la quantité des fonctions -COOH est déterminée par dosage acido-basique de la couche poreuse par de l'hydroxyde de tetra-n-butylammonium $((C_4H_9)_4N^+OH^-$ TBAOH) en solution alcoolique, celle des fonctions -NH2 est déterminée par dosage à l'acide perchlorique $(HClO_4)$ dans l'acide acétique. Les résultats s'expriment en meq/g de polymère évalué. La méthode décrite dans le document AB-068 intitulé « Détermination potentiométrique des groupes terminaux carboxyle et amino dans les polyesters et polyamides » de la société Metrohm détaille le mode opératoire de détermination par titrage potentiométrique des fonctions acides carboxyliques et amines présentes qui a été utilisé.

Les réactifs utilisés pour le dosage sont les suivants :

-    TBAOH (concentration 0,1mol/L dans l'isopropanol) = réactif titrant pour les fonctions réactives COOH,
-    $HClO_4$ (concentration 0,1mol/L dans l'acide acétique glacial) = réactif titrant pour les fonctions réactives NH2,
-    l'alcool benzylique.

Pour la détermination de la quantité de fonctions réactives COOH, entre 0,5 et 1,5g d'échantillon est pesé dans un bécher, mélangé avec 100 mL d'alcool benzylique et dilué par chauffage jusqu'au point d'ébullition. Après refroidissement autour de 80-100°C, le titrage estréalisé avec le TBAOH. L'extrémité de la burette est juste légèrement immergée dans la solution. Une valeur de blanc (c'est-à-dire sans ajout d'échantillon) est déterminée dans les mêmes conditions.
Pour la détermination de la quantité de fonctions réactives NH2, entre 0,5 et 1,0 g d'échantillon est pesé dans un bécher, mélangé avec 100mL d'alcool benzylique et dilué par chauffage jusqu'au point d'ébullition. Après refroidissement autour de 80-100°C, le titrage estréalisé avec l'acide perchlorique $HClO_4$. L'extrémité de la burette est juste légèrement immergée dans la solution. Une valeur de blanc est déterminée dans les mêmes conditions.

La détermination de la quantité de fonctions réactives est ensuite calculée selon la formule :

$$\text{Quantité de fonctions réactives (COOH ou NH2, en µeq/kg)} =$$

$$\frac{(A - B) \times t \times 100}{E}$$

Où A est la consommation en mL de réactif titrant pour l'échantillon, B la consommation en mL de réactif titrant pour le blanc, t le titre du réactif titrant et E la masse d'échantillon en g.

La détermination du titre du réactif titrant est obtenue par potentiométrie selon l'application bulletin Metrohm 206/5 e « Titer determination in potentiometry ». Pour le TBAOH, l'acide benzoïque est généralement utilisé ; pour l'HClO4, le TRIS (tris-hydroxymethyl)-amino-méthane) est généralement utilisé.

Contrecollage des voiles - Obtention d'un matériau de renfort dit UD voilé

Les voiles sont associés à la nappe unidirectionnelle de fils de carbone avec une ligne de production utilisant une machine telle que décrite dans la demande WO 2010/061114 et re-détaillée ci-après, en référence à la figure 1. Le matériau de renfort 1 obtenu est schématiquement représenté sur la figure 2 : il est constitué d'une nappe unidirectionnelle 2 de fils de carbone 3 associée sur chacune de ses faces à un voile 4,5, l'association ayant été obtenue grâce au caractère collant à chaud des voiles 4,5 thermoplastiques.

Les fils de carbone 3 sont déroulés à partir de bobines correspondantes 30 de fils de carbone fixées sur un cantre 40, passent au travers d'un peigne 50, sont conduits dans l'axe de la machine à l'aide d'un rouleau de guidage 60, d'un peigne 70 et d'une barre de guidage 80a.

Les fils de carbone 3 sont préchauffés à l'aide d'une barre chauffante 90 et sont étalés ensuite grâce à la barre d'étalement 80b et la barre chauffante 100 à la masse surfacique de carbone souhaitée pour la nappe unidirectionnelle 2. Les rouleaux 13a et 13b de voiles 4 et 5 sont déroulés sans tension et transportés à l'aide de tapis continus 15a et 15b fixés entre les rouleaux libres en rotation et non motorisés 14a, 14b, 14c, 14d et les barres chauffées 12a, 12b. Les voiles 4 et 5 sont préchauffés dans les zones 11a et 11b avant d'être en contact avec les fils de carbones 3 et contre-collés de part et d'autre de deux barres chauffées 12a et 12b dont l'entrefer est contrôlé. Une calandre 16, qui peut être refroidie, applique ensuite une pression sur la nappe unidirectionnelle avec un voile de chaque côté, pour conduire au matériau de renfort 1 se présentant sous la forme d'un ruban. Un rouleau de renvoi 18 permet de rediriger au matériau de renfort 1 vers le système de traction comprenant un trio d'appel 19 puis d'enroulage 20 piloté par un moteur pour former un rouleau constitué du matériau de renfort 1 ainsi formé.

**Essais réalisés**

*I. Mesures réalisées*

DSC: de l'anglais "Differential Scanning Analysis". Les analyses ont été réalisées sur un appareil Discovery 25 de TA Instruments, Guyancourt, France.

DMA: de l'anglais "Dynamic Mechanical Analysis" pour analyse mécanique dynamique. Les analyses ont été réalisées sur un appareil Q800 de TA Instruments, Guyancourt, France, selon la norme EN 6032 (1Hz, 1°C/min, Amplitude 15 µm).

Analyse au microscope à chaud : Les analyses ont été réalisées sur un Imageur Axio M2m Microscope de Zeiss, Marly-le-Roi, France, équipé d'un dispositif de chauffage de Linkam Scientific Instruments, Tadworth, UK.

Rhéologie : Les analyses de viscosité ont été réalisées sur un rhéomètre HAAKE Mars 60 de Thermofisher Scientific, Courtaboeuf, France. Les analyses sont réalisées selon la norme EN6043 à 2°C/min, 10rad/s, mais à une déformation de 4% et non de 10%.

*II. Influence du taux de fonctions réactives sur la mobilité dans la résine RTM6*

Une couche poreuse (CP) à étudier et de la résine époxy RTM6 appliquée sur ladite couche poreuse sont placés entre deux lames de verre, le tout étant lui-même placé sous microscope optique. L'ensemble est alors soumis à une montée en température de 2°C/min jusqu'à une température de 180°C, correspondant à la température finale lors de l'infusion ou de l'injection de la résine époxy RTM6 lors de la réalisation d'une pièce composite. Il s'agit donc du cycle critique pour la tenue de la couche CP en température, puisqu'aucune étape de pré-réticulation de la résine n'est employée.

La figure 3 présente les images obtenues à 180°C donc post-réticulation de la résine. Il apparait donc que le voile se dissout ou perd totalement son intégrité dans la résine dans le cas des couches CP3, CP4 et CP7 qui ne correspondent pas à la définition de l'invention. Il apparait également que le voile perd son intégrité dans la résine, dans le cas de la couche CP8 qui correspond à l'invention, signe que réactivité et intégrité de la couche poreuse sont décorrélées. Cependant, une réduction de la mobilité de la couche poreuse dans la résine est tout de même observée, ce qui est suffisant.

Il apparait assez nettement que, d'une part, la présence de fonctions -NH2 au niveau d'une couche poreuse, correspondant à une quantité supérieure à 0,15 meq/g permet de conserver son intégrité au contact de la résine époxy et cela, alors même que la température atteinte est bien au-dessus de son point de fusion (couches poreuses CP2 et 5), de la même manière que la couche poreuse CP7a formée avec un polymère thermoplastique partiellement réticulé. La conservation de cette intégrité met bien en évidence qu'une réaction s'est produite entre la couche poreuse et la résine.

De même, il est nécessaire d'avoir une quantité de fonctions -COOH au niveau de la couche poreuse supérieure à 0,20 meq/g pour avoir une réactivité au contact de la résine époxy (couches poreuses CP1, CP8 et CP10), mais cela n'implique pas automatiquement la conservation de son intégrité. Une réduction de la mobilité et de la dissolution de la couche poreuse dans la résine est tout de même observée, ce qui met bien en évidence qu'une réaction s'est produite entre la couche poreuse et la résine. Ces observations mettent donc en exergue le fait que la réaction entre la couche poreuse et la résine époxy peut conduire à un maintien plus ou moins marqué de l'intégrité de la couche poreuse. Des études complémentaires ont été menées pour mettre en évidence la réaction ou l'absence de réaction entre les couches poreuses étudiées et la résine.

*III. Mise en évidence de la réactivité des couches poreuses sur les fonctions époxy*

Différents résultats ont été obtenus avec les couches poreuses et un époxy tetrafonctionnel de chez Huntsman, qui ne comprend pas de durcisseur :

- Analyse calorimétrique différentielle modulée (MDSC)
- Rhéologie plan-plan.

*Analyse calorimétrique différentielle modulée (MDSC)*

Environ 2mg de couche poreuse ont été imprégnés par environ 18 mg d'époxy et l'ensemble a été placé dans une capsule DSC en aluminium hermétiquement scellée puis percée. Les capsules ainsi réalisées ont alors été placées dans une étuve et soumises à un cycle de température équivalent aux cycles classiques utilisés lors de la réalisation d'une pièce composite par infusion ou injection : 1h 120°C + 2h 180°C avec une montéeen température de 2°C/min. Après cuisson, les échantillons ont été refroidis lentement de manière naturelle jusqu'à retour à la température ambiante.

Les échantillons ainsi obtenus ont ensuite été analysés par MDSC à 2°C/min, pour différencier les phénomènes réversibles (transitions vitreuses de l'époxy et du voile, fusion du voile) des phénomènes irréversibles (réticulation exothermique de la résine). Les résultats sont présentés sur la figure 4.

La première observation est que le cycle de cuisson n'impacte pas l'époxy, la courbe MDSC étant inchangée avec une transition vitreuse de l'ordre de -15/- 20°C. Il apparait en revanche clairement qu'en casde réactivité entre la couche poreuse et l'époxy lors du cycle de cuisson, la couche poreuse n'est plus à même de recristalliser et ne présente donc plus de point de fusion lors de l'analyse MDSC (couches poreuses CP1 et 2). A l'inverse, lorsque la couche poreuse ne réagit pas avec l'époxy, elle a la possibilité de recristalliser lors du refroidissement, comme l'indique le point de fusion de la couche poreuse CP9 visible à 150°C environ.

Une deuxième observation est l'amorçage de la réticulation de l'époxy à haute température qui intervient 10 à 20°C plus tôtlorsque la résine a pu réagir partiellement avec la couche poreuse.

Enfin, une légère transition vitreuse est observée aux alentours de 10-20°C lorsque la couche poreuse est capable de réagir avec l'époxy. Cette transition vitreuse pourrait être celle d'une partie de l'époxy ayant amorcé une réticulation avec la couche poreuse.

*Rhéologie plan-plan*

Un disque de 35 mm de diamètre et de 0,12 g de couche poreuse a été préparé par empilement de plusieurs plis de couche poreuse. Le disque ainsi formé a alors été plongé dans la résine époxy RTM6 pour être entièrement imprégné, puis positionné sur le plateau bas du rhéomètre. L'excès de résine a alors été éliminé lors de la descente du plateau haut jusqu'à obtenir un entrefer de 0,5 mm au sein duquel se trouvait l'échantillon couche poreuse imprégné de résine époxy.

La déformation imposée était de 4% et la fréquence de cisaillement de 10 rad/s, selon la norme EN6043 et le cycle de cuisson était une isotherme d'une heure à 120°C, suivie d'une montée à 2°C/min jusqu'à 180°C pendant 2 heures.

La figure 5 montre l'évolution de la viscosité au cours de la cuisson et il apparait clairement qu'après fusion de la couche poreuse CP1, la viscosité augmente progressivement, alors qu'en l'absence de la couche poreuse, la viscosité de la résine RTM6 reste stable, voire diminue légèrement lors de l'augmentation de la température avant que la réticulation n'intervienne. Afin de s'assurer que l'augmentation de la viscosité du système en présence de la couche poreuse CP1 n'était due qu'à la couche poreuse, le même essai a également été réalisé en immergeant celle-ci dans une huile de viscosité identique à la RTM6 à 120°C (huile PMX-50). Il a abrs été constaté que la couche poreuse CP1 fondait de manière plus importante (le niveau de viscosité chutant de 2 décades contre une décade dans la RTM6) et que la viscosité du mélange restait ensuite constante. Cette observation a donc confirmé que l'augmentation observée de la viscosité du système couche poreuse/résine RTM6, qui suivait la fonte de la couche poreuse, était due à des réactions intervenues entre la résine RTM6 (et plus particulièrement sa fonction époxy) et la couche poreuse CP1 (et plus particulièrement ses fonctions réactives - COOH).

La figure 6 présente le même type de résultats, mais en présence de différentes couches poreuses possédant des fonctions -COOH : CP1 et CP8 conformes à l'invention et CP9 porteuse de seulement 0,10 meq/g de fonctions - COOH et 0,12 meq/g de fonctions -NH2, donc hors invention.

Ces résultats montrent nettement qu'en contrôlant la quantité de fonctions - COOH des couches poreuses polyamide, il est possible de contrôler le niveau de réactions de celles-ci avec la résine époxy.

La rhéologie en cisaillement permet, également, de suivre la réticulation, puisqu'au point de gel (ou point de gélification), où les modules de conservation G' et de perte G" sont équivalents. Le point de gel correspond donc à l'intersection entre les deux courbes G' et G".

En augmentant le taux de fonctionnalités -COOH des couches poreuses (CP8), il est possible d'obtenir une réticulation entre la couche poreuse et la résine RTM6 comme l'indique le croisement des modules G' et G" au bout de 50 minutes d'expérience et à 158°C (figure 7). En présence de la couche poreuse CP9, le point de gel de la RTM6 n'est quasiment pas modifié, ce qui confirme que la couche poreuse ne réagit pas avec la résine.

De la même manière, la figure 8 présente l'évolution de la viscosité en présence de différentes couches poreuses possédant des fonctions -NH2. On constate une nouvelle fois qu'en augmentant le taux de fonctions -NH2 des couches poreuses polyamide, il est possible de contrôler le niveau de réactions entre celles-ci et la résine époxy.

Ces résultats ont été complétés par une deuxième série d'expériences qui ont consisté à immerger les couches poreuses étudiées, non pas dans la résine RTM6, mais dans un époxy tetrafonctionnel de chez Huntsman, qui ne comprend pas de durcisseur, ceci afin de mieux mettre en exergue les réactions entre les fonctions réactives du polyamide et l'époxy, qui pouvaient être masquées par la présence du durcisseur au sein de la résine RTM6, puisque la cinétique de réaction époxy/durcisseur est plus rapide que celle de l'époxy seul. Les conditions de tests étaient, sinon, strictement identiques et les résultats obtenus sont présentés en figure 9 et permettent de suivre l'éventuelle gélification du système époxy/polyamide. Avec la couche CP8, une nette augmentation de la viscosité est observée, lors de la montée en température (figure 9), mais, aussi, il apparait que le croisement des modules G' et G" (figure 10) intervient au bout de 28 minutes de montée en température et à 155°C. Il est important de noter que la résine époxy seule gélifie après plus de 11h à 180°C, ce qui confirme également que le point de gel observé en figure 10 provient de la réaction entre la couche poreuse et l'époxy. Pour les autres couches CP1, CP2 et CP5, la modification du point de gel de l'époxy n'est pas observée, cependant, une limitation de la fusion de la couche poreuse ainsi qu'une augmentation de la viscosité du mélange est observée, signe d'une réaction entre les fonctions réactives et l'époxy. Au contraire, la couche CP9 fond de manière prononcée et la viscosité du mélange demeure constante au cours de l'essai, signe d'une absence d'interaction ou de réactivité (figure 9).

## IV. Absence d'influence de la structure de la couche poreuse sur la réactivité avec l'époxy de la résine RTM6

Le polyamide de la couche poreuse 10 (CP10) sous forme de non-tissé a également été testé sous la forme d'un film non poreux de 100 $\mu$m d'épaisseur, afin d'évaluer si la structure de la couche de polyamide utilisée avait une influence sur sa réactivité avec l'époxy de la résine RTM6. Il apparait sur la figure 11 (qui montre l'évolution de la viscosité lors d'une montée en température à 2°C/min de 120°C à 180°C 2h d'échantillons époxy/pyamide selon la structure couche poreuse ou film du polyamide) que la structure de la couche n'a pas d'influence sur sa réactivité avec l'époxy. Ainsi, l'accessibilité des fonctions - COOH du polyamide reste la même qu'il soit sous forme d'un non-tissé (CP10), ou d'un film non poreux.

## V. Réactivité de la couche poreuse à une température inférieure à sa température de fusion

La possibilité pour la couche poreuse de réagir avec la résine RTM6 en dessous de son point de fusion a été validée avec la couche poreuse CP8. La figure 12 montre l'évolution du temps de gel (durée de chauffage à la température Ta jusqu'à l'obtention du point de gel) selon la température d'isotherme Ta (température utilisée pour l'infusion de la résine et la cuisson), appliquée lors de l'essai pour un échantillon RTM6 et un échantillon RTM6/couche poreuse CP8. Il apparait sur la figure 12 que la couche poreuse peut réagir et modifier le point de gel de la RTM6, même en dessous de son point de fusion. Ainsi, même s'il est clair que la cinétique de réaction de la couche poreuse CP8/RTM6 est accélérée lorsque les deux matériaux sont mis en contact au-dessus du point de fusion de la couche poreuse (entrainant une plus grande mobilité de la couche poreuse et donc une accessibilité des fonctions -COOH du polyamide accrue), la réaction est également possible en dessous du point de fusion.

## VI. Application à différentes résines commerciales

Les différentes couches poreuses ont été immergées dans les quatre résines commerciales décrites précédemment, à savoir RTM6, HF620, EP2400 et EP2410. Le point de gel a alors été mesuré comme le croisement des modules G' et G" lors d'une montée en température à 2°C/mh de 120°C à 180°C + 2h à 180°C. La figure 13 présente l'ensemble des résultats obtenus. Lorsque la gélification intervient lors de la phase de chauffage à 180°C, la différence intervient au niveau de la durée de chauffage nécessaire à l'obtention de la gélification, qui est présentée dans la partie supérieure de la figure 13.

La différence de réactivité entre les résines RTM6 et HF620 d'une part, et les résines EP2400 et EP2410 d'autre part apparait clairement et se matérialise par une durée nécessaire pour obtenir une gélification à 180°C très différente. La diminution de la réactivité de la résine donne plus de temps aux couches poreuses pour réagir. Ainsi, bien que des réactions entre les fonctions réactives et l'époxy se produisent comme précédemment mis en évidence, les couches poreuses CP1 (porteuse de fonctions -COOH, conforme à l'invention) et CP5 (porteuse de fonctions -NH2, conforme à l'invention) n'ont pas d'influence sur le point de gel de la RTM6. Par contre, avec ces mêmes couches, le point de gel est modifié pour la résine HF620, et ce de manière encore plus marquée pour les résines EP2400 et EP2410. Ainsi, du fait du ralentissement de la cinétique de réaction époxy/durcisseur dans le cas des résines HF620, EP2400 et EP2410, les réactions entre les fonctions réactives et l'époxy ont plus d'impact sur le point de gélification de la résine. Quoiqu'il en soit, qu'il y ait ou non modification du point de gel, dans le cas de la résine RTM6, avec les couches poreuses selon l'invention, il y a réactions entre les fonctions réactives portées par lesdites couches et la résine époxy, comme précédemment démontré et qui se matérialisent également par un maintien des propriétés mécaniques, comme cela ressort du paragraphe IV ci-après. A l'inverse, avec les couches poreuses CP4 et CP9 (hors invention), il n'y a pas de modification du point de gel, quelle que soit la résine : EP2400 et EP2410 ou RTM6 et HF620. Ceci confirme que dans ce cas, il n'y a pas de réaction avec la résine époxy.

Ces résultats mettent également en évidence l'influence de la fonctionnalité de l'époxy des résines testées. Alors que dans le cas des résines RTM6 et HF620, les époxys sont tétrafonctionnels, ils sont trifonctionnels dans le cas des résines EP2400 et EP2410. Cela signifie qu'il y a donc moins de groupements époxy accessibles dans le cas de ces deux résines, ce qui se traduit par une réactivité plus lente avec les couches poreuses, particulièrement visible dans le cas de la couche poreuse CP8 qui réagissait particulièrement rapidement avec les résines RTM6 et HF620. Cela laisse cependant le temps aux autres couches poreuses de réagir (CP1, CP5).

## VII. Influence de la réactivité des couches poreuses sur les propriétés mécaniques du composite

Sept matériaux de renfort présentés dans le Tableau 5 ont été comparés, quatre selon l'invention et quatre à titre comparatif.

Tableau 5

|  | Matériau 1 comparatif | | Matériau 2 comparatif | Matériau 3 seion l'invention | Matériau 4 selon l'invention |
| --- | --- | --- | --- | --- | --- |
| Couche poreuse | Poudre époxy du tissu Primetex (CP6) | | Voile 1RSD04 (CP9) | CP1 | CP2 |
|  | Materiau 5 selon l'invention | | Matériau 6 selon l'invention | Matériau 7 comparatif | Matériau 7a comparatif |
| Couche poreuse | CPS | | CPS | CP7 | CP7a |

Les conditions utilisées pour la fabrication des nappes unidirectionnelles de carbone combinées avec une couche poreuse de chaque côté sont indiquées dans le Tableau 6 ci-après.

Tableau 6 : Paramètres de procédé pour la mise en œuvre des nappes unidirectionnelles associées à un voile de chaque côté

| Matériau | Masse surfacique mesurée de l'unidirectionnel (g/m²) | Vitesse ligne (m/min) | T barres (°C) (90) | T barre (°C) (100) | T préchauffage voile (°C) (11a & 11b) | T barres (°C) (12a & 12b) |
|---|---|---|---|---|---|---|
| 2 | 210 | 2,4 | 200 | 200 | 160 | 180 |
| 3 | 210 | 2,4 | 60 | 65 | 85 | 100 |
| 4 | 210 | 2,4 | 60 | 65 | 85 | 100 |
| 5 | 210 | 2,4 | 60 | 65 | 85 | 100 |
| 6 | 210 | 2,4 | 60 | 65 | 85 | 100 |
| 7 | 210 | 2,4 | 60 | 65 | 85 | 100 |
| 7a | 210 | 2,4 | 60 | 65 | 85 | 100 |

Une préforme de 340 mm x 340 mm constituée de la séquence d'empilement adapté au grammage de carbone a été placée dans un moule d'injection sous presse. Un cadre d'épaisseur connu entourant la préforme a permis d'obtenir le taux volumique de fibres TVF souhaité.

La résine époxy commercialisée par Hexcel sous la référence HexFlow RTM6 a été injectée à 80°C sous 2 bars à travers la préforme qui était maintenue à 120°C au sein de la presse. La pression appliquée par la presse était de 5,5 bars. Lorsque la préforme a été remplie et que la résine sortait du moule, le tuyau de sortie a été fermé et le cycle de traitement thermique initié : 3°C/min jusqu'à 180°C, suivi d'un chauffage de 2h à 180°C et d'un efroidissement à 5°C/min.

Des éprouvettes ont ensuite été découpées aux dimensions adaptées pour réaliser des tests de compression après impact (CAI), de cisaillement dans le plan (IPS), ainsi que de compression sur plaque trouée (OHC) résumés dans le Tableau 7.

Tableau 7

| | IPS | CAI | OHC |
|---|---|---|---|
| Orientation des plis de la préforme | [45/135]2s | [45/0/135/90]3s | [45/0/135/90]35 |
| Machine de test | Instron 5582 | Zwick Z300 | Zwick Z300 |
| Norme EN | 6031 | 6038 | 6036 |

Les résultats obtenus pour l'ensemble de ces tests sont répertoriés dans les Tableaux 8 à 10. Les résultats mécaniques présentés montrent que les résultats selon l'invention permettent d'obtenir des pièces composites aux propriétés optimales, notamment en termes de résistance à l'impact (CAI), les propriétés mécaniques montrant la sensibilité aux trous telles que la compression trouée (OHC) ou le cisaillement dans le plan (IPS).

On constate ainsi que d'une part, bien que la poudre époxy (matériau comparatif 1) permette de solutionner la problématique de réaliser l'ensemble des étapes du procédé de réalisation de la préforme sèche à des températures comprises entre 80 et 130°C, elle ne permet pas pour autant d'obtenir des pièces composites aux propriétés mécaniques optimales. D'autre part, le voile polyamide classique (matériau comparatif 2) permet à l'inverse d'obtenir des propriétés mécaniques optimales, mais nécessite des températures plus élevées pour sa fabrication et sa mise en forme. Les matériaux selon l'invention répondent, quant à eux, aux deux problématiques.

Les matériaux 3 à 6 selon la présente invention permettent donc de combiner à la fois un procédé de fabrication et de mise en forme à des températures inférieures à 130°C et des propriétés mécaniques optimales sur pièces composites. Il convient également de souligner que les performances mécaniques sont comparables quel que soit le matériau de l'invention, même si l'intégrité de la couche poreuse est perdue et que seule la mobilité de la couche poreuse est réduite (matériau 6 avec couche CP8), ou même si la couche poreuse n'entraine pas une modification du temps de gel de la résine RTM6 (matériau 3 avec couche CP1 ou matériau 5 avec couche CP5). Ainsi, dans tous les cas, avec les matériaux selon l'invention, les réactions fonctions réactives/époxy sont suffisantes pour éviter de détériorer les propriétés mécaniques de la pièce composite obtenue, du fait de la présence de la couche poreuse, malgré son bas point de fusion. De la même manière, on constate qu'avec les matériaux selon l'invention, les propriétés mécaniques sont équivalentes aux propriétés obtenues avec le matériau 7a comparatif dont la couche CP7a thermoplastique est partiellement réticulée.

Les performances IPS sont également améliorées par rapport au matériau comparatif 7.

Tableau 8- IPS

| IPS | Matériau 1 comparatif | Matériau, 2 comparatif | Matériau 3 selon l'invention | Matériau 4 selon l'invention |
|---|---|---|---|---|
| Module (sec, 23°C) (GPa) | 4,1 | 4,4 | 4,5 | 4,4 |
| Contrainte 0,2% (sec, 23°C) (MPa) | 39 | 38 | 39 | 40 |
| Module (sec, 90°C) (GPa) | 3,6 | 3,4 | 3,8 | 3,8 |
| Contrainte 0,2% (sec, 90°C) (MPa) | 32 | 29 | 31 | 32 |
| IPS | Matériau 5 selon l'invention | Matériau 6 selon l'invention | Matériau 7 comparatif | Matériau 7a comparatif |
| Module (sec, 23°C) (GPa) | 4, 6 | 4,6 | 4,2 | 4,6 |
| Contrainte 0,2% (sec, 23°C) (MPa) | 41 | 41 | 40 | 41 |
| Module (sec, 90°C) (GPa) | 3,5 | 3,6 | 2,9 | 3,9 |
| Contrainte 0,2% (sec, 90°C) (MPa) | 30 | 30 | 25 | 33 |

Tableau 9 - OHC

| Compression OHC | Matériau 1 comparatif | Matériau 2 comparatif | Matériau 3 selon l'invention | Matériau 4 selon l'invention |
|---|---|---|---|---|
| sec, 23°C (MPa) | 257 | 285 | 300 | 285 |
| sec, 90°C (MPa) | 228 | 228 | 218 | 218 |
| Compression OHC | Matériau 5 selon l'invention | Matériau 6 selon l'invention | Matériau 7 comparatif | Matériau 7a comparatif |
| sec, 23°C (MPa) | 291 | 292 | 285 | 295 |
| sec, 90°C (MPa) | 220 | 210 | 99 | 238 |

Comme cela ressort du Tableau 9, avec les matériaux selon l'invention, les performances OHC sont identiques voire meilleures.

Tableau 10 - CAI

| CAI normalisée à 60% TVF (sec, 23°C) | Matériau 1 comparatif | Matériau 2 comparatif | Matériau 3 selon l'invention | Matériau 4 selon l'invention |
|---|---|---|---|---|
| 30J (MPa) | 126 | 259 | 293 | 290 |
| 70J (MPa) | - | 192 | 241 | 237 |
| CAI normansée à 60% TVF (sec, 23°C) | Matériau 5 selon l'invention | Matériau 6 selon l'invention | Matériau 7 comparatif | Matériau 7a comparatif |
| 30J (MPa) | 264 | 264 | 167 | 255 |
| 703 (MPa) | - | - | - | 211 |

Avec les matériaux selon l'invention, les performances CAI présentées dans le Tableau 10 sont meilleures par rapport à celles obtenues avec les matériaux comparatifs 1 et 7, de point de fusion comparable. Elles sont, par contre, comparables à celles obtenues avec le matériau comparatif 2 qui nécessite une mise en forme à plus haute température.

*VIII. Influence de la réactivité des couches poreuses sur la stabilité lors du conditionnement en température*

Les essais réalisés ont montré qu'une pièce composite obtenue par association d'un matériau de renfort comportant une couche poreuse thermoplastique et de la résine RTM6 comportait deux transitions lors d'une sollicitation en température. La première transition correspond à la transition vitreuse de la couche poreuse thermoplastique enrichie de résine époxy et se situe à des températures inférieures à 100°C, alorsque la deuxième transition correspond à la transition vitreuse de la matrice époxy et se situe à des températures de l'ordre de 200°C.

La majorité des vieillissements d'un matériau composite au contact de fluides agressifs s'effectue à des températures pouvant aller jusqu'à 70°C avec des temps de contact plus ou moins longs. Lors du vieillissement à 70°C du matériau comparatif 2 (avec une couche poreuse CP9 - 1 R8D04), une évolution de la transition vitreuse de la couche poreuse thermoplastique enrichie de résine époxy, due à une séparation de phase et à une cuisson de cette résine époxy, a été observée. Un exemple de résultat est présenté en figure 14 qui montre la réponse du matériau en sollicitation DMA (courbes DMA obtenues avec et sans conditionnement pendant 14 jours à 70°C : 2°C/min de 25 à 270°C). La transition évolue nettement d'environ 60°C à environ 100°C lors du vieillissement à 70°C, alors que la transition vitreuse de la RTM6 n'évolue pas (non représenté).

A l'inverse, en utilisant les couches poreuses selon l'invention dans les matériaux 5 et 6 selon l'invention (la figure 15 et la figure 16 respectivement), il apparait nettement que la transition vitreuse de la couche poreuse thermoplastique, qui a pu réagir avec la résine époxy, reste relativement stable lors d'un vieillissement à 70°C. Cela s'explique pa le fait qu'il n'y a pas de séparation de phase entre les deux matériaux qui ont réagi chimiquement, lors de la cuisson de la résine RTM6.

Ceci confirme les résultats obtenus en microscopie optique et montre que les réactions entre les couches poreuses selon l'invention et la résine permettent de minimiser l'impact de la présence de ladite couche poreuse sur les propriétés de la résine, malgré son faible point de fusion. C'est là l'un des 'intérêts de l'invention, puisqu'il apparait que la présence des couches poreuses préconisées dans l'invention n'impacte pas les propriétés thermomécaniques de la résine thermodurcissable.

## Revendications

1. Matériau de renfort (1) comprenant au moins un renfort fibreux (2) associé sur au moins une de ses faces à une couche poreuse thermoplastique (4,5), la ou lesdite(s) couche(s) poreuse(s) thermoplastique(s) (4,5) représentant au plus 10% de la masse totale du matériau de renfort (1), de préférence de 0,5 à 10% de la masse totale du matériau de renfort (1), et préférentiellement de 2 à 6% de la masse totale du matériau de renfort (1), ledit renfort fibreux (2) étant une nappe unidirectionnelle de fils de renfort (3), un tissu de fils de renfort ou un empilement de nappes unidirectionnelles de fils de renfort liées entre elles par couture ou tout autre moyen physique, notamment du type aiguilletage, **caractérisé en ce que** ladite couche poreuse thermoplastique (4,5) ou chacune desdites couches poreuses thermoplastiques (4,5) présentes comprend un polymère thermoplastique dit réactif ou est constituée d'un ou plusieurs polymères thermoplastiques réactifs, un polymère thermoplastique réactif étant porteur de fonctions -NH2 en quantité supérieure à 0,15 meq/g de polymère thermoplastique réactif et/ou porteur de fonctions -COOH en quantité supérieure à 0,20 meq/g de polymère thermoplastique réactif.

2. Matériau de renfort (1) selon la revendication 1 **caractérisé en ce que** ledit polymère thermoplastique réactif est porteur de fonctions -NH$_2$ en quantité supérieure à 0,20 meq/g de polymère thermoplastique réactif, de préférence dans la gamme allant de 0,20 à 1 meq/g de polymère thermoplastique réactif et préférentiellement dans la gamme allant de 0,20 à 0,95 meq/g de polymère thermoplastique réactif, et/ou est porteur de fonctions -COOH en quantité supérieure à 0,20 meq/g de polymère thermoplastique réactif, de préférence dans la gamme allant de 0,20 à 1 meq/g de polymère thermoplastique réactif et préférentiellement dans la gamme allant de 0,20 à 0,95 meq/g de polymère thermoplastique réactif.

3. Matériau de renfort (1) selon la revendication 1 ou 2 **caractérisé en ce que** le polymère thermoplastique réactif du ou desdites couche(s) poreuse(s) thermoplastique(s) (4,5) présente(s) au sein du matériau de renfort (1) a une température de fusion appartenant à la gamme allant de 100 à 140 °C, et de préférence à la gamme allant de 100 à 130°C.

4. Matériau de renfort (1) selon l'une quelconque des revendications 1 à 3 **caractérisé en ce que** le polymère thermoplastique réactif est un polyamide ou un copolyamide porteur desdites fonctions -NH2 et/ou -COOH.

5. Matériau de renfort (1) selon l'une quelconque des revendications 1 à 4, **caractérisé en ce que** la ou lesdites couche(s) poreuse(s) thermoplastique(s) (4,5) présente(s) comporte(nt) des fonctions - NH$_2$ en quantité supérieure à 0,15 meq/g de couche poreuse et/ou des fonctions -COOH en quantité supérieure à 0,20 meq/g de couche poreuse.

6. Matériau de renfort (1) selon l'une quelconque des revendications 1 à 5, **caractérisé en ce que** le polymère thermoplastique réactif possède une masse moléculaire moyenne en nombre Mn supérieure à 4000 g/mol.

7. Matériau de renfort (1) selon l'une quelconque des revendications 1 à 6, **caractérisé en ce que** le renfort fibreux (2) est constitué de fibres de verre, de fibres d'aramide, ou, de préférence, de fibres de carbone.

8. Matériau de renfort (1) selon l'une quelconque des revendications 1 à 7, **caractérisé en ce qu'**il est constitué d'une nappe unidirectionnelle de fils de renfort (3) correspondant au renfort fibreux (2), associée sur au moins une de ses faces à une couche poreuse thermoplastique (4,5) telle que définie à l'une quelconque des revendications 1 à 6, de préférence ledit matériau de renfort (1) étant constitué d'une nappe unidirectionnelle de fils de renfort (3) correspondant au renfort fibreux (2), associée sur chacune de ses faces à une couche poreuse thermoplastique (4,5) telle que définie à l'une quelconque des revendications 1 à 6 et les couches poreuses thermoplastiques (4,5) présentes sur chacune des faces de la nappe unidirectionnelle de fils de renfort (3) étant identiques.

9. Matériau de renfort (1) selon l'une quelconque des revendications 1 à 8, **caractérisé en ce que** ladite ou lesdites(s) couche(s) poreuse(s) thermoplastique(s) (4,5) ont un caractère collant à chaud et l'association du renfort fibreux (2) et de ladite couche poreuse a été réalisée grâce au caractère collant à chaud de ladite couche poreuse thermoplastique (4,5).

10. Matériau de renfort (1) selon l'une quelconque des revendications 1 à 7, **caractérisé en ce qu'**il est constitué d'un empilement de nappes unidirectionnelles de fils de renfort (3), en tant que renforts fibreux (2), orientées selon des directions différentes, avec au moins une couche poreuse thermoplastique (4,5) telle que définie à l'une quelconque des revendications 1 à 5 intercalée entre deux nappes unidirectionnelles de fils de renfort (3) et/ou en surface de l'empilement.

11. Matériau de renfort (1) selon la revendication 10 **caractérisé en ce qu'**il est constitué d'une superposition de couches correspondant à un enchainement $(CP/R)_n(CP)_m$ ou $(CP/R/CP)_n$ avec CP qui désigne une couche poreuse thermoplastique (4,5) telle que définie à l'une quelconque des revendications 1 à 5, R une nappe unidirectionnelle, n un nombre entier supérieur ou égal à 1 et m qui est égal à 0 ou à 1.

12. Matériau de renfort (1) selon la revendication 10 ou 11, **caractérisé en ce que** l'association des nappes unidirectionnelles de fils de renfort (3) entre elles, voire leur association avec l'au moins une couche poreuse thermoplastique (4,5), est réalisée par couture, tricotage ou aiguilletage.

13. Matériau de renfort (1) selon l'une quelconque des revendications 1 à 12, **caractérisé en ce que** la ou lesdite(s) couche(s) poreuse(s) thermoplastique(s) (4,5) présente(s) est(sont) un film poreux, une grille, un dépôt de poudre, un tissu ou, de préférence, un non-tissé ou voile.

14. Procédé de préparation d'un matériau de renfort (1) selon l'une quelconque des revendications 1 à 13, **caractérisé en ce qu'**il comprend les étapes successives suivantes :

   a1) disposer d'un renfort fibreux (2),
   a2) disposer d'au moins une couche poreuse thermoplastique (4,5) comprenant un polymère thermoplastique dit réactif, ou constituée d'un ou plusieurs polymères thermoplastiques réactifs, un polymère thermoplastique réactif étant porteur de fonctions $-NH_2$ en quantité supérieure à 0,15 meq/g de polymère thermoplastique réactif et/ou porteur de fonctions -COOH en quantité supérieure à 0,20 meq/g de polymère thermoplastique réactif,
   a3) procéder à l'association du renfort fibreux et de l'au moins une couche poreuse thermoplastique (4,5).

15. Procédé de préparation selon la revendication 14 **caractérisé en ce que** l'association de l'étape a3) est obtenue par application de l'au moins une couche poreuse thermoplastique (4,5) sur le renfort fibreux (2), ladite application étant accompagnée ou suivie d'un chauffage dudit polymère thermoplastique réactif entrainant son ramollissement ou sa fusion, puis suivie d'un refroidissement, ledit chauffage étant de préférence réalisé à une température inférieure à 170°C, voire à 150°C et préférentiellement appartenant à la gamme allant de 100 à 140 °C, et de préférence à la gamme allant de 100 à 130°C.

16. Préforme constituée, au moins en partie, d'un ou plusieurs matériaux de renfort (1) selon l'une des revendications 1 à 13.

17. Procédé de fabrication d'une pièce composite à partir d'au moins un matériau de renfort (1) selon l'une quelconque des revendications 1 à 13, **caractérisé en ce qu'**une résine thermodurcissable époxy est injectée ou infusée au sein dudit matériau de renfort (1), d'un empilement de plusieurs matériaux de renfort (1) selon l'une quelconque des revendications 1 à 13, ou d'une préforme selon la revendication 16.

18. Procédé de fabrication d'une pièce composite selon la revendication 17, **caractérisé en ce qu'**il comprend une fois que la résine thermodurcissable époxy a été injectée ou infusée au sein dudit matériau de renfort ou dudit empilement, une étape de traitement thermique, comprenant un chauffage à une température Ta, conduisant à la réticulation de la résine époxy et à la consolidation de la pièce composite, lors de laquelle la résine époxy réagit avec au moins une partie des fonctions -NH2 et/ou -COOH présentes sur le polymère thermoplastique réactif de la ou des couche(s) poreuse(s) thermoplastique(s) (4,5).

19. Procédé de fabrication d'une pièce composite selon la revendication 18, **caractérisé en ce que** la gélification de la résine époxy intervient lors de l'étape de traitement thermique et les fonctions -NH2 et/ou - COOH réagissent avec ladite résine, avant la gélification de cette dernière.

20. Procédé de fabrication d'une pièce composite selon l'une des revendications 17 à 19, **caractérisé en ce que** ladite température Ta est supérieure à la température de fusion dudit polymère thermoplastique réactif de l'au moins une couche poreuse thermoplastique (4,5).

21. Procédé de fabrication d'une pièce composite selon l'une des revendications 17 à 19, **caractérisé en ce que** ladite température Ta est inférieure à la température de fusion dudit polymère thermoplastique réactif de ladite au moins une couche poreuse thermoplastique (4,5), et, de préférence, la gélification de la résine thermodurcissable époxy intervient plus tôt que si cette dernière était soumise seule à l'étape de traitement thermique.

22. Procédé de fabrication d'une pièce composite selon l'une des revendications 17 à 21, **caractérisé en ce que** la température Ta appartient à la gamme allant de 120 à 220°C, de préférence appartient à la gamme allant de 160 à 220°C, préférentiellement à la gamme allant de 170 à 190°C, et est typiquement égale à 180° C.

23. Procédé de fabrication d'une pièce composite selon l'une des revendications 17 à 22, **caractérisé en ce que** la résine thermodurcissable époxy a une viscosité inférieure à 1000 mPa.s à une température de 90°C.

24. Procédé de fabrication d'une pièce composite selon l'une des revendications 17 à 23, **caractérisé en ce qu'**il comprend, préalablement à l'infusion ou à l'injection de ladite résine thermodurcissable époxy, un dépôt ou une mise en forme du(des)dit(s) matériau(x) de renfort (1), qui de préférence utilise le caractère collant à chaud de ladite au moins une couche poreuse thermoplastique (4,5) présente dans le(s)dit(s) matériau(x) de renfort (1) et met en œuvre un chauffage, de préférence, réalisé à une température inférieure à 170°C, voire à 150°C et préférentiellement appartenant à la gamme allant de 100 à 140 °C, et de préférence à lagamme allant de 100 à 130°C.

25. Pièces composites obtenues par un procédé de fabrication tel que défini à l'une quelconque des revendications 17 à 24.

**Patentansprüche**

1. Verstärkungsmaterial (1), umfassend mindestens eine faserige Verstärkung (2), die auf mindestens einer ihrer Flächen mit einer thermoplastischen porösen Schicht (4, 5) verbunden ist, wobei die thermoplastische(n) poröse(n) Schicht(en) (4, 5) höchstens 10 % der Gesamtmasse des Verstärkungsmaterials (1), vorzugsweise 0,5 bis 10 % der Gesamtmasse des Verstärkungsmaterials (1) und bevorzugt 2 bis 6 % der Gesamtmasse des Verstärkungsmaterials (1) ausmachen, wobei die faserige Verstärkung (2) eine unidirektionale Bahn aus Verstärkungsfäden (3), ein Gewebe aus Verstärkungsfäden oder eine Stapelung unidirektionaler Bahnen aus Verstärkungsfäden ist, die durch Vernähen oder jedes andere physikalisches Mittel, insbesondere vom Typ des Vernadelns, miteinander verbunden sind, **dadurch gekennzeichnet, dass** die poröse thermoplastische Schicht (4, 5) oder jede der vorhandenen thermoplastischen porösen Schichten (4, 5) ein sogenanntes reaktives thermoplastisches Polymer umfasst oder aus einem oder mehreren reaktiven thermoplastischen Polymeren besteht, wobei ein reaktives thermoplastisches Polymer -NH2-Funktionen in einer Menge von mehr als 0,15 mÄq/g an reaktivem thermoplastischem Polymer und/oder -COOH-Funktionen in einer Menge von mehr als 0,20 mÄq/g an reaktivem thermoplastischem Polymer trägt.

2. Verstärkungsmaterial (1) nach Anspruch 1, **dadurch gekennzeichnet, dass** das reaktive thermoplastische Polymer

-NH$_2$-Funktionen in einer Menge von mehr als 0,20 mÄq/g an reaktivem thermoplastischem Polymer, vorzugsweise im Bereich von 0,20 bis 1 mÄq/g an reaktivem thermoplastischem Polymer und bevorzugt im Bereich von 0,20 bis 0,95 mÄq/g an reaktivem thermoplastischem Polymer, und/oder -COOH-Funktionen in einer Menge von mehr als 0,20 mÄq/g an reaktivem thermoplastischem Polymer, vorzugsweise im Bereich von 0,20 bis 1 mÄq/g an reaktivem thermoplastischem Polymer und bevorzugt im Bereich von 0,20 bis 0,95 mÄq/g an reaktivem thermoplastischem Polymer trägt.

3. Verstärkungsmaterial (1) nach Anspruch 1 oder 2, **dadurch gekennzeichnet, dass** das reaktive thermoplastische Polymer der porösen thermoplastischen Schicht(en) (4, 5) im Verstärkungsmaterial (1) eine Schmelztemperatur im Bereich von 100 bis 140 °C und vorzugsweise im Bereich von 100 bis 130 °C aufweist.

4. Verstärkungsmaterial (1) nach einem der Ansprüche 1 bis 3, **dadurch gekennzeichnet, dass** das reaktive thermoplastische Polymer ein Polyamid oder ein Copolyamid ist, das die -NH2- und/oder -COOH-Funktionen trägt.

5. Verstärkungsmaterial (1) nach einem der Ansprüche 1 bis 4, **dadurch gekennzeichnet, dass** die vorhandene(n) thermoplastische(n) poröse(n) Schicht(en) (4, 5) -NH$_2$-Funktionen in einer Menge von mehr als 0,15 mÄq/g an poröser Schicht und/oder - COOH-Funktionen in einer Menge von mehr als 0,20 mÄq/g an poröser Schicht aufweisen.

6. Verstärkungsmaterial (1) nach einem der Ansprüche 1 bis 5, **dadurch gekennzeichnet, dass** das reaktive thermoplastische Polymer ein zahlenmittleres Molekulargewicht Mn von mehr als 4000 g/mol besitzt.

7. Verstärkungsmaterial (1) nach einem der Ansprüche 1 bis 6, **dadurch gekennzeichnet, dass** die faserige Verstärkung (2) aus Glasfasern, Aramidfasern oder vorzugsweise aus Kohlenstofffasern besteht.

8. Verstärkungsmaterial (1) nach einem der Ansprüche 1 bis 7, **dadurch gekennzeichnet, dass** es aus einer unidirektionalen Bahn aus Verstärkungsfäden (3) besteht, die der faserigen Verstärkung (2) entspricht, das auf mindestens einer seiner Flächen mit einer thermoplastischen porösen Schicht (4, 5) verbunden ist, wie sie in einem der Ansprüche 1 bis 6 definiert ist, wobei das Verstärkungsmaterial (1) vorzugsweise aus einer unidirektionalen Bahn aus Verstärkungsfäden (3) besteht, die der Faserverstärkung (2) entspricht, das auf jeder seiner Flächen mit einer porösen thermoplastischen Schicht (4, 5) verbunden ist, wie sie in einem der Ansprüche 1 bis 6 definiert ist, und wobei die porösen thermoplastischen Schichten (4, 5) auf jeder der Flächen der unidirektionalen Bahn aus Verstärkungsfäden (3) identisch sind.

9. Verstärkungsmaterial (1) nach einem der Ansprüche 1 bis 8, **dadurch gekennzeichnet, dass** die thermoplastische(n) poröse(n) Schicht(en) (4, 5) wärmeverklebbar sind und die Verbindung der faserigen Verstärkung (2) mit der porösen Schicht dank der Wärmeverklebbarkeit der thermoplastischen porösen Schicht (4, 5) hergestellt wurde.

10. Verstärkungsmaterial (1) nach einem der Ansprüche 1 bis 7, **dadurch gekennzeichnet, dass** es aus einer Stapelung unidirektionaler Bahnen aus Verstärkungsfäden (3) als faserige Verstärkungen (2) besteht, die in unterschiedliche Richtungen ausgerichtet sind, mit mindestens einer thermoplastischen porösen Schicht (4, 5), wie in einem der Ansprüche 1 bis 5 definiert, die zwischen zwei unidirektionalen Bahnen aus Verstärkungsfäden (3) und/oder an der Oberfläche der Stapelung eingefügt ist.

11. Verstärkungsmaterial (1) nach Anspruch 10, **dadurch gekennzeichnet, dass** es aus einer Überlagerung von Schichten besteht, die einer Verkettung $(CP/R)_n(CP)_m$ oder $(CP/R/CP)_n$ entspricht, wobei CP eine thermoplastische poröse Schicht (4, 5) bezeichnet, wie in einem der Ansprüche 1 bis 5 definiert, R eine unidirektionale Bahn, n eine ganze Zahl größer oder gleich 1 und m gleich 0 oder 1 ist.

12. Verstärkungsmaterial (1) nach Anspruch 10 oder 11, **dadurch gekennzeichnet, dass** die Verbindung der unidirektionalen Bahnen aus Verstärkungsfäden (3) untereinander sowie deren Verbindung mit der mindestens einen thermoplastische poröse Schicht (4, 5) durch Vernähen, Verstricken oder Vernadeln hergestellt wird.

13. Verstärkungsmaterial (1) nach einem der Ansprüche 1 bis 12, **dadurch gekennzeichnet, dass** die vorhandene(n) thermoplastische(n) poröse(n) Schicht(en) (4, 5) ein poröser Film, ein Gitter, eine Pulverablagerung, ein Stoff oder vorzugsweise ein Vliesstoff oder ein Tuch ist/sind.

14. Verfahren zur Herstellung eines Verstärkungsmaterials (1) nach einem der Ansprüche 1 bis 13, **dadurch ge-**

**kennzeichnet, dass** es die folgenden aufeinanderfolgenden Schritte umfasst:

a1) Anordnen einer faserigen Verstärkung (2),
a2) Anordnen mindestens einer thermoplastischen porösen Schicht (4, 5), umfassend ein sogenanntes reaktives thermoplastisches Polymer oder bestehend aus einem oder mehreren reaktiven thermoplastischen Polymeren, wobei ein reaktives thermoplastisches Polymer -$NH_2$-Funktionen in einer Menge von mehr als 0,15 mÄq/g an reaktivem thermoplastischem Polymer und/oder -COOH-Funktionen in einer Menge von mehr als 0,20 mÄq/g an reaktivem thermoplastischem Polymer trägt,
a3) Durchführen der Verbindung der faserigen Verstärkung mit der mindestens einen thermoplastischen porösen Schicht (4, 5).

15. Herstellungsverfahren nach Anspruch 14, **dadurch gekennzeichnet, dass** die Verbindung des Schritts a3) durch Aufbringen der mindestens einen thermoplastischen porösen Schicht (4, 5) auf die faserige Verstärkung (2) erhalten wird, wobei dieses Aufbringen von einer Erwärmung des reaktiven thermoplastischen Polymers begleitet oder gefolgt wird, die dessen Erweichung oder Schmelzen bewirkt, und anschließend von einer Abkühlung gefolgt wird, wobei das Erwärmen vorzugsweise bei einer Temperatur unter 170°C, sogar bei 150°C, und vorzugsweise im Bereich von 100 bis 140 °C, insbesondere im Bereich von 100 bis 130 °C, durchgeführt wird.

16. Vorform, die zumindest teilweise aus einem oder mehreren Verstärkungsmaterialien (1)nach einem der Ansprüche 1 bis 13 besteht.

17. Verfahren zur Herstellung eines Verbundteils aus mindestens einem Verstärkungsmaterial (1) nach einem der Ansprüche 1 bis 13, **dadurch gekennzeichnet, dass** ein duroplastisches Epoxidharz in das Verstärkungsmaterial (1), aus einer Stapelung mehrerer Verstärkungsmaterialien (1) nach einem der Ansprüche 1 bis 13 oder aus einer Vorform nach Anspruch 16, eingespritzt oder infundiert wird.

18. Verfahren zur Herstellung eines Verbundteils nach Anspruch 17, **dadurch gekennzeichnet, dass** es, nachdem das duroplastische Epoxidharz in das Verstärkungsmaterial oder die Stapelung eingespritzt oder infundiert wurde, einen Wärmebehandlungsschritt umfasst, der ein Erwärmen auf eine Temperatur Ta umfasst, was zur Vernetzung des Epoxidharzes und zur Verfestigung des Verbundteils führt, wobei das Epoxidharz mit mindestens einem Teil der -NH2- und/oder -COOH-Funktionen reagiert, die auf dem reaktiven thermoplastischen Polymer der porösen thermoplastischen Schicht(en) (4,5) vorhanden sind.

19. Verfahren zur Herstellung eines Verbundteils nach Anspruch 18, **dadurch gekennzeichnet, dass** die Gelierung des Epoxidharzes während des Wärmebehandlungsschritts erfolgt und die -NH2- und/oder -COOH-Funktionen mit dem Harz vor dessen Gelierung reagieren.

20. Verfahren zur Herstellung eines Verbundteils nach einem der Ansprüche 17 bis 19, **dadurch gekennzeichnet, dass** die Temperatur Ta über der Schmelztemperatur des reaktiven thermoplastischen Polymers der mindestens einen thermoplastischen porösen Schicht (4, 5) liegt.

21. Verfahren zur Herstellung eines Verbundteils nach einem der Ansprüche 17 bis 19, **dadurch gekennzeichnet, dass** die Temperatur Ta unterhalb der Schmelztemperatur des reaktiven thermoplastischen Polymers der mindestens einen thermoplastischen porösen Schicht (4, 5) liegt, und vorzugsweise die Gelierung des duroplastischen Epoxidharzes früher erfolgt, als wenn dieses allein der Wärmebehandlung unterzogen würde.

22. Verfahren zur Herstellung eines Verbundteils nach einem der Ansprüche 17 bis 21, **dadurch gekennzeichnet, dass** die Temperatur Ta im Bereich von 120 bis 220 °C liegt, vorzugsweise im Bereich von 160 bis 220 °C liegt, bevorzugt im Bereich von 170 bis 190 °C liegt und in der Regel 180 °C beträgt.

23. Verfahren zur Herstellung eines Verbundteils nach einem der Ansprüche 17 bis 22, **dadurch gekennzeichnet, dass** das duroplastische Epoxidharz bei einer Temperatur von 90 °C eine Viskosität von weniger als 1000 mPa·s aufweist.

24. Verfahren zur Herstellung eines Verbundteils nach einem der Ansprüche 17 bis 23, **dadurch gekennzeichnet, dass** es vor dem Infundieren oder Einspritzen des duroplastischen Epoxidharzes eine Ablagerung oder Formen des (der) Verstärkungsmaterials (1) umfasst, wobei vorzugsweise die Wärmeverklebbarkeit der mindestens einen thermoplastischen porösen Schicht (4, 5), die in dem (den) Verstärkungsmaterial(ien) (1) vorhanden ist, genutzt wird und eine Erwärmung durchgeführt wird, vorzugsweise bei einer Temperatur unter 170 °C, sogar bei 150 °C und bevorzugt im Bereich von 100 bis 140 °C, sowie vorzugsweise im Bereich von 100 bis 130 °C.

25. Verbundteile, die durch ein Herstellungsverfahren nach einem der Ansprüche 17 bis 24 erhalten werden.

**Claims**

1. Reinforcing material (1) comprising at least one fibrous reinforcement (2) associated on at least one of its faces with a thermoplastic porous layer (4,5), said thermoplastic porous layer(s) (4,5) representing at most 10% of the total mass of the reinforcing material (1), preferably from 0.5 to 10% of the total mass of the reinforcing material (1), and more preferably from 2 to 6% of the total mass of the reinforcing material (1), said fibrous reinforcement (2) being a unidirectional web of reinforcing yarns (3), a fabric of reinforcing yarns or a stack of unidirectional webs of reinforcing yarns bonded together by needling or any other physical means, **characterized in that** said porous thermoplastic layer (4, 5) or each of said porous thermoplastic layers (4, 5) present comprises a so-called reactive thermoplastic polymer or consists of one or more reactive thermoplastic polymers, a reactive thermoplastic polymer carrying -NH2 functions in a quantity greater than 0.15 meq/g of reactive thermoplastic polymer and/or carrying - COOH functions in a quantity greater than 0.20 meq/g of reactive thermoplastic polymer.

2. Reinforcing material (1) according to claim 1, **characterized in that** the said reactive thermoplastic polymer carries -$NH_2$ functions in an amount greater than 0.20 meq/g of reactive thermoplastic polymer, preferably in the range from 0.20 to 1 meq/g of reactive thermoplastic polymer and more preferably in the range from 0.20 to 0.95 meq/g of reactive thermoplastic polymer, and/or carries - COOH functions in an amount greater than 0.20 meq/g of reactive thermoplastic polymer, preferably in the range from 0.20 to 1 meq/g of reactive thermoplastic polymer and more preferably in the range from 0.20 to 0.95 meq/g of reactive thermoplastic polymer.

3. Reinforcing material (1) according to claim 1 or 2, **characterized in that** the reactive thermoplastic polymer of said porous thermoplastic layer(s) (4,5) present within the reinforcing material (1) has a melting temperature in the range from 100 to 140°C, and preferably in the range from 100 to 130°C.

4. Reinforcing material (1) according to any one of claims 1 to 3, **characterized in that** the reactive thermoplastic polymer is a polyamide or copolyamide carrying said -NH2 and/or -COOH functions.

5. Reinforcing material (1) according to any one of claims 1 to 4, **characterized in that** the said thermoplastic porous layer(s) (4,5) present comprise(s) -$NH_2$ functions in an amount greater than 0.15 meq/g of porous layer and/or -COOH functions in an amount greater than 0.20 meq/g of porous layer.

6. Reinforcing material (1) according to any one of claims 1 to 5, **characterized in that** the reactive thermoplastic polymer has a number-average molecular weight Mn greater than 4000 g/mol.

7. Reinforcing material (1) according to any one of claims 1 to 6, **characterized in that** the fibrous reinforcement (2) consists of glass fibers, aramid fibers or, preferably, carbon fibers.

8. Reinforcing material (1) according to any one of claims 1 to 7, **characterized in that** it consists of a unidirectional web of reinforcing yarns (3) corresponding to the fibrous reinforcement (2), associated on at least one of its faces with a thermoplastic porous layer (4, 5) as defined in any one of claims 1 to 6, preferably said reinforcing material (1) consisting of a unidirectional web of reinforcing yarns (3) corresponding to the fibrous reinforcement (2), associated on each of its faces with a thermoplastic porous layer (4,5) as defined in any one of claims 1 to 6, and the thermoplastic porous layers (4,5) present on each of the faces of the unidirectional web of reinforcing yarns (3) being identical.

9. Reinforcing material (1) according to any one of claims 1 to 8, **characterized in that** said thermoplastic porous layer(s) (4, 5) have a hot tackiness and the association of the fibrous reinforcement (2) and said porous layer has been achieved thanks to the hot tackiness of said thermoplastic porous layer (4, 5).

10. Reinforcing material (1) according to any one of claims 1 to 7, **characterized in that** it consists of a stack of unidirectional webs of reinforcing yarns (3), as fibrous reinforcements (2), oriented in different directions, with at least one thermoplastic porous layer (4, 5) as defined in any one of claims 1 to 5 interposed between two unidirectional webs of reinforcing yarns (3) and/or on the surface of the stack.

11. Reinforcing material (1) according to claim 10, **characterized in that** it consists of a superposition of layers corresponding to a sequence $(CP/R)_n$ $(CP)_m$ or $(CP/R/CP)_n$ with CP designating a thermoplastic porous layer (4, 5) as defined in any one of claims 1 to 5, R a unidirectional web, n an integer greater than or equal to 1 and m equal to 0 or 1.

12. Reinforcing material (1) according to claim 10 or 11, **characterized in that** the unidirectional webs of reinforcing yarns (3) are associated with one another or with the at least one porous thermoplastic layer (4, 5) by sewing, knitting or needling.

13. Reinforcing material (1) according to any one of claims 1 to 12, **characterized in that** said porous thermoplastic layer(s) (4,5) present is (are) a porous film, a grid, a powder deposit, a fabric or, preferably, a non-woven or veil.

14. Method of preparing a reinforcing material (1) according to any one of claims 1 to 13, **characterized in that** it comprises the following successive steps:

a1) providing a fibrous reinforcement (2),
a2) providing at least one thermoplastic porous layer (4, 5) comprising a so-called reactive thermoplastic polymer, or consisting of one or more reactive thermoplastic polymers, a reactive thermoplastic polymer carrying $-NH_2$ functions in an amount greater than 0.15 meq/g of reactive thermoplastic polymer and/or carrying -COOH functions in a quantity greater than 0.20 meq/g of reactive thermoplastic polymer,
a3) associating the fibrous reinforcement and the at least one porous thermoplastic layer (4,5).

15. Method of preparation according to claim 14, **characterized in that** the association of step a3) is achieved by applying the at least one porous thermoplastic layer (4, 5) on the fibrous reinforcement (2), said application being accompanied or followed by heating of said reactive thermoplastic polymer causing its softening or melting, then followed by cooling, said heating preferably being carried out at a temperature below 170°C, or even 150°C and preferably in the range from 100 to 140°C, and more preferably in the range from 100 to 130°C.

16. Preform consisting, at least in part, of one or more reinforcing materials (1) according to one of claims 1 to 13.

17. Method of manufacturing a composite part from at least one reinforcing material (1) according to any one of claims 1 to 13, **characterized in that** an epoxy thermosetting resin is injected or infused into said reinforcing material (1), a stack of several reinforcing materials (1) according to any one of claims 1 to 13, or a preform according to claim 16.

18. Method of manufacturing a composite part according to claim 17, **characterized in that** it comprises, once the epoxy thermosetting resin has been injected or infused into said reinforcing material or said stack, a heat treatment step, comprising heating to a temperature Ta, leading to crosslinking of the epoxy resin and consolidation of the composite part, during which the epoxy resin reacts with at least some of the -NH2 and/or -COOH functions present on the reactive thermoplastic polymer of the thermoplastic porous layer(s) (4,5).

19. Method of manufacturing a composite part according to claim 18, **characterized in that** gelling of the epoxy resin takes place during the heat treatment step and the -NH2 and/or -COOH functions react with said resin, prior to gelling of the latter.

20. Method of manufacturing a composite part according to one of claims 17 to 19, **characterized in that** said temperature Ta is higher than the melting temperature of said reactive thermoplastic polymer of the at least one porous thermoplastic layer (4, 5).

21. Method of manufacturing a composite part according to one of claims 17 to 19, **characterized in that** said temperature Ta is lower than the melting temperature of said reactive thermoplastic polymer of said at least one porous thermoplastic layer (4, 5), and, preferably, gelling of the epoxy thermosetting resin occurs earlier than if the latter were subjected to the heat treatment step alone.

22. Method of manufacturing a composite part according to one of claims 17 to 21, **characterized in that** the temperature Ta is in the range from 120 to 220°C, preferably is in the range from 160 to 220°C, more preferably is in the range from 170 to 190°C, and is typically equal to 180°C.

23. Method of manufacturing a composite part according to one of claims 17 to 22, **characterized in that** the epoxy thermosetting resin has a viscosity of less than 1000 mPa.s at a temperature of 90°C.

24. Method of manufacturing a composite part according to one of claims 17 to 23, **characterized in that** it comprises, prior to infusion or injection of said epoxy thermosetting resin, deposition or shaping of said reinforcing material(s) (1), which preferably utilizes the hot tackiness of said at least one thermoplastic porous layer (4,5) present in said reinforcing material(s) (1) and implements heating, preferably carried out at a temperature below 170°C, or even 150°C and preferably is in the range from 100 to 140°C, and more preferably in the range from 100 to 130°C.

25. Composite parts obtained by a manufacturing process as defined in any one of claims 17 to 24.

[Fig. 1]

[Fig. 2]

[Fig. 3]

CP1          CP2          CP3          CP4          CP5

CP7          CP7a          CP8          CP9          CP10

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

[Fig. 14]

[Fig. 15]

[Fig. 16]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1125728 A
- WO 2006096170 A1
- US 6828016 B
- US 2010003881 A
- WO 0058083 A
- WO 2007015706 A
- WO 2006121961 A
- US 6503856 B
- US 20087435693 A
- WO 2010046609 A
- WO 2010061114 A
- EP 2547816 A
- US 20080289743 A
- US 20078361262 A
- US 20119371604 A
- WO 2011048340 A
- WO 2010067003 A
- WO 2019102136 A
- WO 2011086266 A
- EP 3197974 A
- FR 2883878
- US 20100032629 A
- US 20210086226 A
- WO 2019243631 A
- FR 2761380
- WO 2014076433 A1
- WO 2014191667 A

**Littérature non-brevet citée dans la description**

- **P. FAVIA** ; **R. D'AGOSTINO** ; **F. PALUMBO**. Grafting of Chemical Groups onto Polymers by Means of RF Plasma Treatments : a Technology for Biomedical Applications. *J. Phys. IV France*, 1997, vol. 07, C4-199, C4-208
- **C. OEHR** ; **M. MÜLLER** ; **B. ELKIN** ; **D. HEGEMANN** ; **U. VOHRER**. Plasma grafting - a method to obtain monofunctional surfaces. *Surface and Coatings Technology*, September 1999, vol. 116-119, 25-35
- ASM Handbook. ASM International, 2001
- Textile Structural Composites. **TSU WEI CHOU** ; **FRANCK.K.KO**. Composite Materials. Elsevier Science Publishers B.V, 1989, vol. 3
- Détermination potentiométrique des groupes terminaux carboxyle et amino dans les polyesters et polyamides. AB-068. Metrohm
- Titer determination in potentiometry. *Metrohm*, vol. 206/5